(19) **Europäisches Patentamt / European Patent Office / Office européen des brevets**

(11) **EP 3 250 316 B1**

(12) **FASCICULE DE BREVET EUROPEEN**

(45) Date de publication et mention de la délivrance du brevet:
**07.09.2022 Bulletin 2022/36**

(21) Numéro de dépôt: **16701769.8**

(22) Date de dépôt: **27.01.2016**

(51) Classification Internationale des Brevets (IPC):
**B01J 13/16** (2006.01)   **B01J 13/14** (2006.01)
**B01J 13/06** (2006.01)

(52) Classification Coopérative des Brevets (CPC):
**B01J 13/16**

(86) Numéro de dépôt international:
**PCT/EP2016/051660**

(87) Numéro de publication internationale:
**WO 2016/120308 (04.08.2016 Gazette 2016/31)**

(54) **PROCÉDÉ D'ENCAPSULATION**

VERKAPSELUNGSVERFAHREN

ENCAPSULATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2015 FR 1550617**

(43) Date de publication de la demande:
**06.12.2017 Bulletin 2017/49**

(73) Titulaire: **Calyxia**
**94380 Bonneuil-sur-Marne (FR)**

(72) Inventeurs:
• **BIBETTE, Jérôme**
**75005 Paris (FR)**
• **WALTERS, Jamie Dean**
**94380 Bonneuil-sur-Marne (FR)**

(74) Mandataire: **Lavoix**
**2, place d'Estienne d'Orves**
**75441 Paris Cedex 09 (FR)**

(56) Documents cités:
WO-A1-2004/041251   WO-A1-2013/132082
WO-A1-2013/132083   WO-A2-01/91703
WO-A2-2010/070602   CN-A- 103 962 075
US-A1- 2007 148 198   US-A1- 2007 172 426

• **DATABASE WPI Week 201410 29 avril 2011 (2011-04-29) Thomson Scientific, London, GB; AN 2012-Q04079 XP002750594, -& KR 2012 0122688 A (HYUNG JAE BIO CO LTD) 7 novembre 2012 (2012-11-07)**
• **DATABASE WPI Week 201472 19 mai 2014 (2014-05-19) Thomson Scientific, London, GB; AN 2014-T00931 XP002750595, -& CN 103 962 075 A (UNIV SICHUAN) 6 août 2014 (2014-08-06)**
• **DATABASE WPI Week 201230 11 août 2011 (2011-08-11) Thomson Scientific, London, GB; AN 2012-E16886 XP002750596, & CN 102 389 756 A (CHANGCHUN GENESCIENCE PHARM CO LTD) 28 mars 2012 (2012-03-28)**
• **SHIN-HYUN KIM ET AL: "One-Step Emulsification of Multiple Concentric Shells with Capillary Microfluidic Devices", ANGEWANDTE CHEMIE, vol. 123, no. 37, 29 juillet 2011 (2011-07-29), pages 8890-8893, XP055223267, DE ISSN: 0044-8249, DOI: 10.1002/ange.201102946**

## Description

La présente invention concerne un procédé d'encapsulation, les capsules obtenues par ce procédé, une composition les comprenant, ainsi qu'un procédé utilisant de telles capsules.

Dans le cadre d'une réaction chimique à l'échelle industrielle, pour fournir les réactifs nécessaires à ladite réaction, il est souvent nécessaire d'isoler un réactif d'un autre réactif (ou d'un mélange réactionnel) jusqu'au moment l'on souhaite utiliser ce réactif. Il est en effet souhaitable qu'un réactif donné soit introduit au moment opportun dans un milieu afin d'optimiser la réaction chimique qui doit avoir lieu.

En général, on résout ce problème en fournissant chaque réactif dans des conditionnements séparés, et en mélangeant les différents réactifs ensemble au moment de la réaction. Cette solution présente néanmoins des inconvénients. Ainsi, chaque réactif nécessite d'être stocké dans un conditionnement séparé, ce qui augmente les coûts associés à ces conditionnements, le poids global des réactifs à approvisionner, et par conséquent les coûts de distribution. En outre, dans le but d'essayer néanmoins de minimiser ces coûts malgré ces divers conditionnements, on utilise de grands conditionnements pour stocker ces réactifs, ce qui oblige l'utilisateur à mesurer avec précision la quantité de chaque réactif nécessaire lors de la mise en œuvre de la réaction qu'il souhaite réaliser. Cette contrainte est susceptible de générer des erreurs de mesure et ainsi des variations dans les propriétés du produit final de la réaction.

Une autre solution envisagée a été d'encapsuler les réactifs afin de les isoler complètement et de les libérer sur commande au moment choisi pour mettre en œuvre la réaction. Cependant, les méthodes proposées pour encapsuler les réactifs *en bulk* se sont révélées insatisfaisantes pour confiner complètement, sans aucune contamination ou fuite, lesdits réactifs dans le *bulk.*

Plus récemment, l'industrie chimique a envisagé d'utiliser la microfluidique pour encapsuler plus efficacement les réactifs. La microfluidique pourrait en principe être utilisée pour cette application, mais les contraintes techniques de cette technologie ne sont actuellement pas compatibles avec les taux de production imposés et la souplesse requise par les demandes de production industrielle.

KR 2012 0122688 décrit un procédé de préparation de microcapsules de poly(ε-caprolactone) comprenant la préparation d'une solution aqueuse comprenant un milieu de culture à base de *Pseudomonas* et d'alginate de sodium, la dissolution de cette solution dans du dichlorométhane avec un émulsifiant, pour obtenir une émulsion, le mélange de cette émulsion avec une solution aqueuse d'acide polyvinylique, pour obtenir une émulsion W1/O1/W2, la préparation d'une phase organique à base de dichlorométhane et de poly(ε-caprolactone) et la dissolution de cette phase organique dans l'émulsion précédente pour obtenir une émulsion W1/O1/W2/O2 ; et l'évaporation du dichlorométhane pour obtenir les microcapsules.

WO 2004/041251 concerne des microcapsules avec des écorces multiples ainsi que leurs procédés de préparation et leurs utilisations.

CN 103 962 075 décrit la préparation de microcapsules composites comprenant l'addition séquentielle, dans un dispositif microfluidique, d'une phase huileuse interne, d'une phase aqueuse interne, d'une phase huileuse intermédiaire, d'une phase aqueuse externe et d'une phase huileuse externe.

WO 2013/132083 décrit une dispersion comprenant une pluralité de corps dispersés et une phase continue recevant lesdits corps dispersés, chaque corps dispersé comprenant une goutte interne et une membrane.

WO 2013/132082 décrit une composition sous forme de gel aqueux contenant au moins une capsule comprenant un cœur liquide comprenant au moins un agent actif, et une enveloppe gélifiée encapsulant totalement le cœur liquide, ladite enveloppe gélifiée comprenant au moins un polyélectrolyte à l'état gélifié.

US 2007/148198 décrit une capsule comprenant un cœur à base de chlorure de calcium, une enveloppe interne à base d'alginate, une enveloppe intermédiaire à base de Saran F-310 et une enveloppe externe à base d'alcool polyvinylique.

Les méthodes d'encapsulation proposées jusqu'à présent ne permettent pas de répondre aux contraintes imposées par la production de produits chimiques à l'échelle industrielle.

Il existe donc un besoin pour un moyen de fourniture de réactifs plus efficace dans le but de réaliser une réaction chimique, en particulier à l'échelle industrielle.

Un but de la présente invention est de fournir un procédé d'encapsulation d'un composé, typiquement un réactif, permettant d'isoler complètement ledit composé du milieu extérieur, qui ne présente pas les inconvénients des moyens existants.

La présente invention a également pour but de fournir un tel procédé permettant en outre de déclencher sur commande la libération du composé encapsulé, par exemple pour qu'il réagisse avec un autre composé présent dans le milieu extérieur.

En particulier, la présente invention a pour but de fournir un procédé de conditionnement de deux composés, typiquement de deux réactifs, au sein d'une même formulation, permettant d'isoler un premier composé d'un second composé, sans que ceux-ci ne réagissent entre eux.

La présente invention repose sur un procédé d'encapsulation, qui permet de répondre aux problèmes techniques ci-dessus et qui ne présente pas les inconvénients des méthodes d'encapsulation existantes.

Selon un premier objet, la présente invention concerne un procédé de préparation de capsules solides, comprenant les étapes suivantes :

a) addition sous agitation d'une composition C1 comprenant au moins un composé A, dans une composition liquide C2 comprenant un matériau thermo-expansible choisi dans le groupe constitué des cires, des fluorocarbones, et de leurs mélanges,

C1 et C2 n'étant pas miscibles l'une dans l'autre,
C2 étant à une température T2,
ce par quoi on obtient une émulsion comprenant des gouttes de composition C1 dispersées dans la composition C2,

b) addition sous agitation de l'émulsion obtenue à l'étape a) dans une composition liquide C3 apte à être polymérisée,

C3 et C2 n'étant pas miscibles l'une dans l'autre,
C3 étant à une température T3, de préférence égale à T2,
ce par quoi on obtient une émulsion comprenant des gouttes dispersées dans la composition C3,

c) addition sous agitation de l'émulsion obtenue à l'étape b) dans une composition liquide C4,

C4 et C3 n'étant pas miscibles l'une dans l'autre,
C4 étant à une température T4 inférieure ou égale à T2 et inférieure ou égale à T3,
ce par quoi on obtient une émulsion comprenant des gouttes dispersées dans la composition C4, et

d) polymérisation par réticulation des gouttes obtenues à l'étape c),
ce par quoi on obtient des capsules solides dispersées dans la composition C4.

La libération du composé A contenu dans les capsules solides obtenues selon le procédé de l'invention est initiée par une élévation de température, qui entraîne une dilatation du matériau thermo-expansible de la composition C2, ce qui provoque une rupture de l'enveloppe rigide polymérisée des capsules (qui elle ne peut pas se dilater du fait de la polymérisation). Cet aspect de l'invention sera détaillé plus loin.

Le procédé de l'invention présente la particularité de ne pas nécessiter d'étapes intermédiaires d'évaporation, entre les différentes étapes a), b), c) et d) susmentionnées (qui seront décrites ci-après en détail).

Le procédé selon l'invention est également avantageux en ce qu'il s'agit d'un procédé "batch". En effet, celui-ci peut être mené en effectuant les différentes étapes a), b), c) et d) susmentionnées dans un contenant unique.

Par ailleurs, ce procédé consiste essentiellement en des étapes standards d'émulsification, pouvant être effectuées sans ajout de tensioactifs. Or, malgré l'absence de tensioactifs, les émulsions obtenues sont stables.

En outre, le procédé selon l'invention permet de s'affranchir d'étapes de microfluidique pour contrôler les tailles des produits obtenus.

Les étapes du procédé de l'invention vont à présent être décrites en détail.

## Procédé

## Etape a)

Lors de l'étape a), on additionne, de préférence au goutte-à-goutte, une composition C1, typiquement liquide, à une composition liquide C2 portée à la température T2.

A la température T2, les compositions C1 et C2 ne sont pas miscibles l'une dans l'autre, c'est-à-dire qu'à cette température la composition C1 n'est pas soluble dans la composition C2, et inversement. Plus précisément, par « C1 et C2 ne sont pas miscibles l'une dans l'autre », on entend que, à une température donnée, la quantité (en masse) de C1 capable d'être solubilisée dans C2 est inférieure ou égale à 5%, de préférence inférieure ou égale à 1%, de préférence inférieure ou égale à 0,5% par rapport à la masse totale de C2, et que la quantité (en masse) de C2 capable d'être solubilisée dans C1 est inférieure ou égale à 5%, de préférence inférieure ou égale à 1%, de préférence inférieure ou égale à 0,5%, par rapport à la masse totale de C1.

Ainsi, lorsqu'elle entre en contact avec la composition C2 sous agitation, la composition C1 se disperse sous forme de gouttes, dites gouttes simples.

La composition C2 est agitée de manière à former une émulsion liquide-liquide comprenant des gouttes de composition C1 dispersées dans la composition C2. Cette émulsion est aussi appelée « émulsion simple » ou émulsion C1-dans-C2.

Pour mettre en œuvre l'étape a), on peut utiliser tout type d'agitateur usuellement utilisé pour former des émulsions, comme par exemple un homogénéisateur à ultrasons, un homogénéisateur à membrane, un homogénéisateur à haute pression, un moulin colloïdal, un disperseur à haut pouvoir de cisaillement ou un homogénéisateur à haute vitesse.

La **composition C1** comprend au moins un composé A. Cette composition C1 sert de véhicule au composé A dans le procédé de l'invention, au sein des gouttes formées lors du procédé de l'invention et des capsules solides obtenues.

Selon une première variante du procédé de l'invention, la composition C1 est monophasique, c'est-à-dire qu'il s'agit du composé A pur ou bien d'une solution comprenant le composé A sous forme solubilisée.

Selon cette variante, la composition C1 consiste typiquement en une solution du composé A dans un solvant organique, ou un mélange de solvants organiques, le composé A étant présent selon une teneur massique comprise de 1% à 99%, par rapport à la masse totale de la composition C1. Le composé A peut être présent selon une teneur massique comprise de 5% à 95%, de 10% à 90%, de 20% à 80%, de 30% à 70%, ou de 40% à 60%, par rapport à la masse totale de la composition C1.

Selon un mode de réalisation, la composition C1 consiste en le composé A.

Selon cette variante, dans les gouttes formées à l'issue de l'étape a), le composé A présent dans la composition C1 est directement au contact de l'enveloppe de composition C2. Néanmoins, du fait de l'immiscibilité entre la composition C1 et la composition C2, le composé A reste confiné dans le cœur des gouttes.

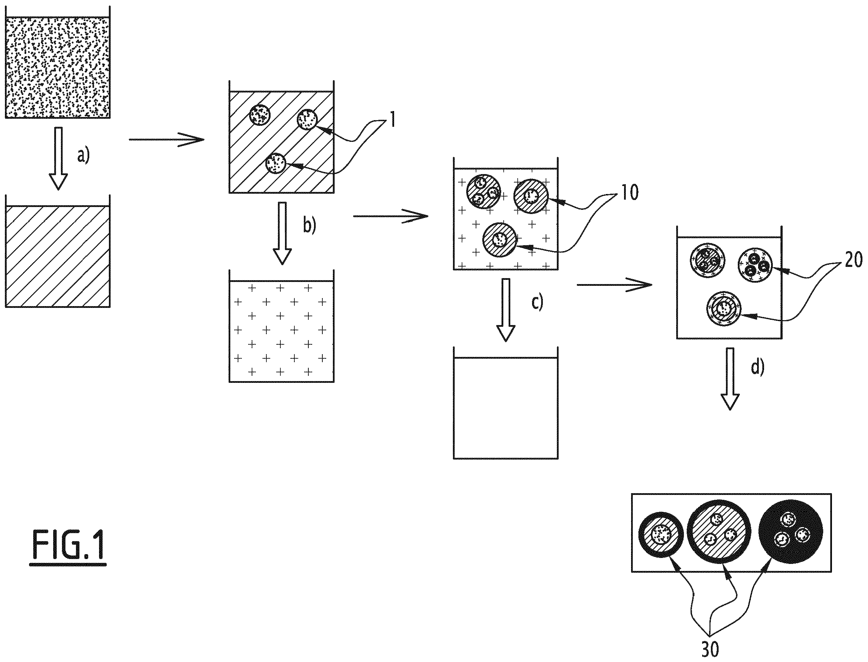

La Figure 1 représente de manière schématique un procédé selon cette variante de l'invention et représente notamment de manière schématique des gouttes 1 obtenues à l'issue de l'étape a) et les capsules solides 30 obtenues *in fine* selon cette variante du procédé.

Selon une deuxième variante du procédé de l'invention, la composition C1 est biphasique et comprend, outre le composé A, une composition liquide C'3 apte à être polymérisée, ladite composition C'3 correspondant de préférence à la composition C3 utilisée lors de l'étape b) ultérieure.

Selon cette variante, la composition C1 est une émulsion formée de gouttes d'une solution comprenant le composé A sous forme solubilisée, lesdites gouttes étant dispersées dans la composition C'3. La solution comprenant le composé A consiste typiquement en une solution du composé A dans un solvant organique ou un mélange de solvants organiques. Cette solution comprend typiquement de 1% à 99%, voire de 5% à 95%, de 10% à 90%, de 20% à 80%, de 30% à 70%, ou de 40% à 60% de composé A par rapport à la masse totale de ladite solution.

La composition C'3 est typiquement présente dans la composition C1 selon une teneur massique comprise de 1% à 50%, voire de 10% à 40%, ou de 20% à 30%, par rapport à la masse totale de ladite composition C1.

Une telle composition C1 est typiquement obtenue en dispersant, sous agitation, une solution comprenant le composé A sous forme solubilisée dans une composition liquide C'3, ladite solution et ladite composition liquide C'3 n'étant pas miscibles l'une dans l'autre.

Selon cette variante, les gouttes formées à l'issue de l'étape a) comprennent typiquement un cœur comprenant le composé A et une enveloppe liquide de composition C'3 disposée autour dudit cœur, lesdites gouttes étant dispersées dans la composition C2.

Par « enveloppe disposée autour dudit cœur », on entend que l'enveloppe entoure, de préférence totalement, ledit cœur de sorte que celui-ci ne peut s'échapper de l'enceinte formée par ladite enveloppe. De préférence, l'enveloppe qui entoure ledit cœur est disposée au contact dudit cœur. On dit aussi que le cœur est « encapsulé » dans l'enveloppe.

Les capsules solides obtenues à l'issue de l'étape d) du procédé selon cette variante comprennent ainsi deux enveloppes rigides polymérisées : l'une interne au contact du cœur contenant le composé A, et l'autre externe en périphérie.

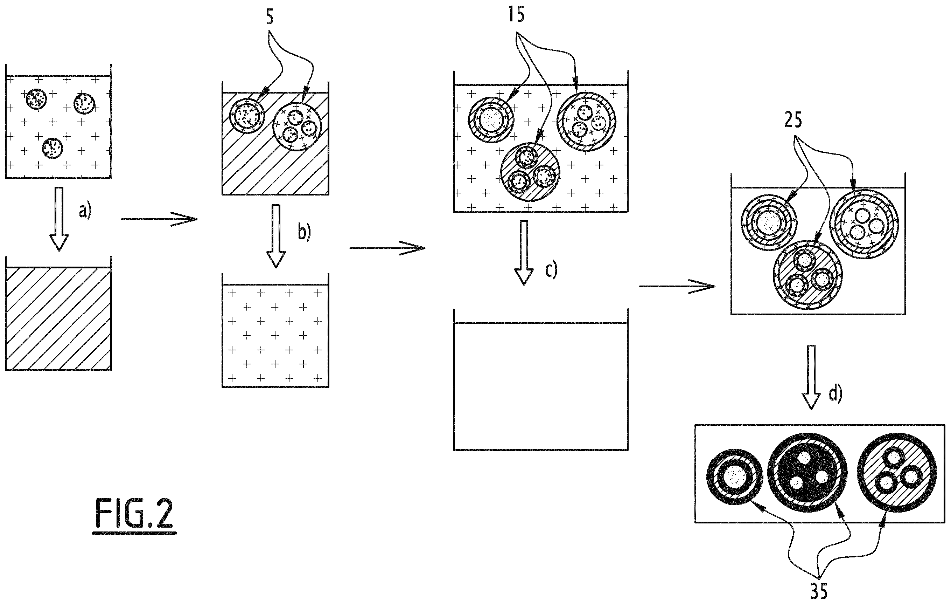

La Figure 2 représente de manière schématique un procédé selon cette variante de l'invention et représente notamment de manière schématique des gouttes 5 obtenues à l'issue de l'étape a) et des capsules solides 35 obtenues *in fine* selon cette variante du procédé.

Selon une troisième variante du procédé de l'invention, on réitère, après l'étape b) et avant l'étape c), au moins une fois les étapes a) et b).

La séquence des étapes du procédé selon cette variante est ainsi a)-b)-a)-b)-...-c)-d).

Les capsules solides obtenues à l'issue de l'étape d) comprennent ainsi au moins deux enveloppes rigides polymérisées. On multiplie ainsi les couches de protection entre le cœur et le milieu extérieur, ce qui élimine tout risque de fuite non désirée du composé A.

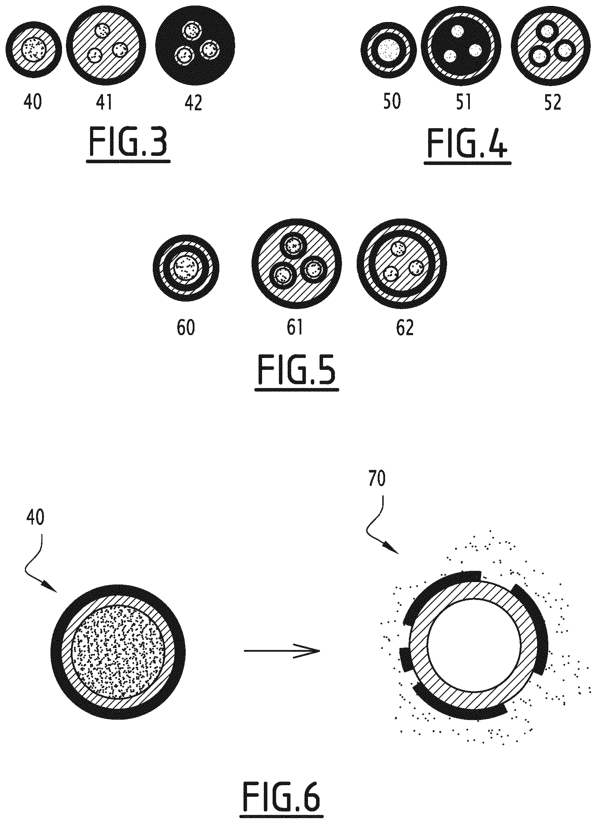

La Figure 5 représente de manière schématique des capsules solides obtenues *in fine* selon cette variante du procédé.

Le composé A est par exemple un colorant, un parfum (comme listé par l'IFRA), un pigment comme le dioxyde de titane, un actif de soin comme par exemple des protéines, des vitamines, des extraits végétaux, des acides aminés, des lipides, ou un composé bioactif comme une enzyme.

Le composé A peut également être un réactif propre à réagir avec un autre réactif contenu dans la composition comprenant les capsules de l'invention. Cet aspect de l'invention sera abordé plus en profondeur ci-après.

La **composition C2** comprend un matériau thermo-expansible.

Dans le cadre de la présente invention, on entend par « matériau thermo-expansible », un matériau, solide ou liquide à température ambiante (i.e. entre 20°C et 25°C), dont le volume varie de manière réversible en fonction de sa température. En d'autres termes, un matériau thermo-expansible se dilate lorsque sa température augmente et se contracte lorsque sa température diminue. Cette propriété est quantifiée par son coefficient de dilatation volumique, exprimé en $K^{-1}$, et déterminé à une température donnée.

De préférence, le matériau thermo-expansible de l'invention présente un coefficient de dilatation volumique supérieur ou égal à $1.10^{-4}$ $K^{-1}$, dans une gamme de températures comprenant la température à laquelle on souhaite provoquer la libération du composé A, par exemple à la température de 20°C.

Lorsqu'un échantillon d'un matériau occupant un volume $V_0$ à la température $T_0$ est chauffé à la température $T_f$ où il occupe alors un volume $V_f$, le coefficient de dilatation thermique $\alpha$ est défini par :

$$\alpha = \frac{V_f - V_0}{V_0(T_f - T_0)}$$

Avant l'addition de la composition C1, la composition C2 est portée à une température T2 telle que le matériau thermo-expansible est sous forme liquide (ou fondue).

La température T2 peut être adaptée en fonction des caractéristiques physico-chimiques du matériau thermo-expansible, mais reste de préférence supérieure ou égale au point de fusion dudit matériau thermo-expansible.

Selon un mode de réalisation, la composition C2 est sous forme solide (ou figée) à température ambiante et sous forme liquide (ou fondue) à la température T2. C'est typiquement le cas lorsque le matériau thermo-expansible a un point de fusion supérieur à la température ambiante, comme par exemple une cire solide à température ambiante.

Selon un autre mode de réalisation, la composition C2 est sous forme liquide à température ambiante et sous forme liquide (ou fondue) à la température T2. C'est typiquement le cas lorsque le matériau thermo-expansible a un point de fusion inférieur à la température ambiante, comme par exemple un fluorocarbone liquide à température ambiante.

Ces modes de réalisation particuliers seront détaillés ci-après.

A la température T2, la composition C2 est liquide et présente typiquement une viscosité supérieure ou égale à 1 cP, de préférence comprise de 1 cP à 10000 cP, préférentiellement comprise de 10 cP à 1 000 cP, par exemple de l'ordre de 100 cP.

La viscosité est par exemple mesurée à l'aide d'un rhéomètre HAAKE™ RheoStress 600, à la température T2.

De préférence, à la température T2, la composition C2 est plus visqueuse que la composition C1. Ceci permet une formation améliorée de l'émulsion C1-dans-C2, sans phénomène de coalescence de gouttelettes de composition C1.

La température T2 est typiquement supérieure ou égale à 10°C, de préférence supérieure ou égale à 20°C, avantageusement comprise de 30°C à 200°C, préférentiellement comprise de 30°C à 100°C

La température T2 est par exemple comprise de 20°C à 40°C.

De préférence, T2 est telle qu'elle n'altère pas les constituants de la composition C2 ou de la composition C1, et/ou qu'elle ne fait pas s'évaporer les solvants éventuellement présents dans la composition C1.

Le matériau thermo-expansible est typiquement présent selon une teneur de 1% à 100%, de préférence de 10% à 90%, préférentiellement de 30% à 70%, en poids par rapport au poids total de la composition C2.

Selon l'invention, le matériau thermo-expansible est choisi dans le groupe constitué des cires, des fluorocarbones, et de leurs mélanges.

Selon un mode de réalisation préféré, le matériau thermo-expansible est une cire ou un mélange de cires.

La (ou les) cire(s) considérée(s) dans le cadre de la présente invention est (sont) d'une manière générale un composé lipophile, solide à température ambiante (entre 20°C et 25°C), à changement d'état solide/liquide réversible, ayant un point de fusion supérieur ou égal à 30°C pouvant aller jusqu'à 200°C et notamment jusqu'à 120°C.

Les cires sont des matériaux thermo-expansibles, qui se dilatent notamment (mais pas seulement) lors de leurs changements d'états solide → liquide.

Lorsque le matériau thermo-expansible est choisi dans le groupe constitué des cires, T2 est de préférence supérieure ou égale au point de fusion de ladite cire, de sorte que la composition C2 soit liquide à la température T2. Dans ce cas, T4 est de préférence inférieure ou égale au point de fusion de ladite cire, de sorte que dans les gouttes obtenues à l'issue de l'étape c), et dans les capsules solides obtenues à l'issue de l'étape d), la composition C2 soit sous forme solide.

La libération du composé A encapsulé est dans ce cas typiquement initiée en soumettant les capsules à une température supérieure ou égale au point de fusion de la cire utilisée comme matériau thermo-expansible. Le changement d'état solide → liquide de la cire provoque une dilatation de la composition C2 et ainsi une rupture de l'enveloppe rigide polymérisée des capsules.

Les cires convenant à l'invention peuvent présenter un point de fusion supérieur ou égal à 35°C, en particulier supérieur ou égal à 40°C, de préférence supérieur ou égal à 45°C, préférentiellement supérieur ou égal à 50°C, avantageusement supérieur ou égal à 60°C, voire supérieur ou égal à 70°C, ou encore à 80°C, à 90°C, à 100°C, à 110°C, ou à 150°C.

Au sens de l'invention, le point de fusion (ou température de fusion) correspond à la température du pic le plus endothermique observé en analyse thermique (DSC) telle que décrite dans la norme ISO 11357-3 ; 1999. Le point de fusion de la cire peut être mesuré à l'aide d'un calorimètre à balayage différentiel (DSC), par exemple le calorimètre vendu sous la dénomination "DSC Q2000" par la société TA Instruments.

La ou les cire(s) peut (peuvent) être hydrocarbonée(s), fluorée(s) et/ou siliconée(s) et être d'origine végétale, minérale, animale et/ou synthétique. On peut également utiliser un mélange de cires, de type identique ou différent.

On peut de préférence utiliser en tant que cire(s), les cires hydrocarbonées comme la cire d'abeille, la cire de lanoline, et les cires d'insectes de Chine, la cire de riz, la cire de Carnauba, la cire de Candellila, la cire d'Ouricurry, la cire d'Alfa, la cire Esparto, la cire de fibres de liège, la cire de canne à sucre, la cire d'orange et la cire de citron, la cire shellac, la cire du Japon et la cire de sumac, la cire de lignite, les cires microcristallines, les cires de paraffines et l'ozokérite, les cires de polyéthylène, les cires obtenues par la synthèse de Fisher-Tropsch et les copolymères cireux ainsi que leurs esters.

On peut également citer les cires polyvinyl éther, les cires basées sur du cétyl palmitate, les cires de type ester de glycérol et d'acides gras, les cires de copolymères éthylène, les cires de polyéthylène oxydée, les cires homopolymères éthylène, les cires de polyéthylène, les cires polyéther, les cires copolymères éthylène/vinyl acétate et les cires polypropylène.

On peut aussi citer les cires obtenues par hydrogénation catalytique d'huiles animales ou végétales ayant des chaînes grasses, linéaires ou ramifiées, en $C_8$-$C_{32}$.

Parmi celles-ci, on peut notamment citer l'huile de jojoba isomérisée, l'huile de tournesol hydrogénée, l'huile de ricin hydrogénée, l'huile de coprah hydrogénée et l'huile de lanoline hydrogénée.

On peut encore citer les cires de silicone comme les alkyl ou alkoxy-diméticone ayant de 16 à 45 atomes de carbone, les cires fluorées.

On peut également utiliser la cire obtenue par hydrogénation d'huile d'olive estérifiée avec des alcools gras ou bien encore les cires obtenues par hydrogénation d'huile de ricin estérifiée avec des alcools gras.

Ces cires peuvent être utilisées séparément ou en combinaison pour ajuster les propriétés, telles que la viscosité et le point de fusion du matériau thermo-expansible.

A titre de cires utilisables, on peut citer les hydrocarbures (n-alcanes, alcanes ramifiés, oléfines, alcanes cycliques, isoprénoïdes), les cétones (monocétones, β-dicétones), les alcools secondaires, les alcanediols (alcane-1,2-diols, alcane-2,3-diols, alcane-α,ω-diols), les acides (acide alcénoïque et acide alcanoïque), les cires ester (esters d'alcool primaire et esters d'alcool secondaire), les cires diester (diesters d'alcanediol, diesters d'hydroxylacides), les cires triester (triacylglycérols, triesters de alcane-1,2-diol, de ω-hydroxy acide et d'acide gras, esters d'acide hydroxymalonique, d'acide gras et d'alcool, triesters d'hydroxylacides, d'acide gras et d'alcool gras, triesters d'acide gras, d'hydroxylacide et de diol) et les cires polyesters (polyesters d'acides gras).

On peut par exemple citer le n-octacosane, le n-heptacosane, le n-hexacosane, le n-pentacosane, le n-tétracosane, le n-tricosane, le n-docosane, le n-hénéicosane, le n-eicosane, le n-nonadécane, l'alcool myristylique, l'alcool pentadécylique, l'alcool cétylique, l'alcool palmitoléylique, l'alcool heptadécylique, l'alcool stéarylique, l'alcool nonadécylique, l'alcool arachidylique, l'alcool hénéicosylique, l'alcool béhénylique, l'alcool érucylique, l'alcool lignocérylique, l'alcool cérylique, le 1-heptacosanol, l'alcool montanylique, l'alcool cluytylique, le 1-octacosanol, le 1-nonacosanol, l'alcool myricylique, l'alcool melissylique, le 1-triacontanol et le 1-dotriacontanol.

Les acides gras utilisables à titre de cires dans le cadre du procédé de l'invention sont par exemple l'acide cérotique, l'acide palmitique, l'acide stéarique, l'acide béhénique, l'acide lignocérique, l'acide arachidique, l'acide myristique, l'acide laurique, l'acide tridécyclique, l'acide pentadécyclique, l'acide margarique, l'acide nonadécyclique, l'acide hénéicosylique, l'acide tricosylique, l'acide pentacosylique, l'acide heptacosylique, l'acide montanique, et l'acide nonacosylique.

Les esters d'acides gras utilisables à titre de cires dans le cadre du procédé de l'invention sont par exemple le palmitate de cétyle, le l'octanoate de cétyle, le laurate de cétyle, le lactate de cétyle, l'isononanoate de cétyle, le stéarate de cétyle, le stéarate de stéaryle, le stéarate de myristyle, le myristate de cétyle, le stéarate d'isocétyle, le trimyristate de glycéryle, le tripalmitate de glycéryle, le monostéarate de glycéryle et le palmitate de glycéryle et de cétyle.

L'utilisation d'une cire présente l'avantage de pouvoir adapter le matériau thermo-expansible en fonction de l'utilisation souhaitée des capsules obtenues par le procédé de l'invention. On peut en effet sélectionner la cire utilisée en fonction de son point de fusion et de la température de libération souhaitée.

Si l'on souhaite encapsuler le composé A en deçà de 35°C et le libérer lorsque la température atteint cette température de seuil, on peut utiliser une cire de paraffine (température de fusion de l'ordre de 37°C).

Pour une libération à 40°C, on peut utiliser la SUPPOCIRE® DM de la société GATTEFOSSE (température de fusion de l'ordre 42°C).

Pour une libération à 45°C, on peut utiliser une cire polyvinyl éther (point de fusion de l'ordre 47°C).

Pour une libération à 50°C, on peut utiliser une cire basée sur du cétyl palmitate (point de fusion de l'ordre 54°C).

Pour une libération à 60°C, on peut utiliser de la cire d'abeille (point de fusion de l'ordre 62°C).

Pour une libération à 65°C, on peut utiliser la cire Candelilla (point de fusion de l'ordre 68°C).

Pour une libération à 75°C, on peut utiliser la cire de son de riz (point de fusion de l'ordre 77°C).

Pour une libération à 80°C, on peut utiliser la cire de carnauba (point de fusion de l'ordre 82°C) ou la cire de lignite (point de fusion de l'ordre 82°C) ou la cire shellac (point de fusion de l'ordre 80-100°C).

Pour une libération à 90°C, on peut utiliser une cire copolymère éthylène (point de fusion de l'ordre 90°C) ou une cire de polyéthylène oxydée (point de fusion de l'ordre 94°C).

Pour une libération à 100°C, on peut utiliser une cire homopolymère éthylène (point de fusion de l'ordre 100°C).

Pour une libération à 110°C, on peut utiliser une cire polyéthylène (point de fusion de l'ordre 110°C) ou une cire copolymère éthylène/vinyl acétate (point de fusion de l'ordre 110°C).

Pour une libération à 160°C, on peut utiliser une cire polypropylène (point de fusion de l'ordre 160°C).

Les cires mentionnées ci-dessus peuvent être modifiées de façon à ajuster leur point de fusion.

Par exemple, la cire de paraffine peut être en C-18 (28°C), en C-20 (37°C) ou en C-34 (76°C).

Selon un mode de réalisation particulier, le matériau thermo-expansible comprend une cire choisie dans le groupe constitué des mono-, di- et triesters de glycérol et d'acides gras ayant une chaîne hydrocarbonée linéaire ou ramifiée comprenant de 8 à 24 atomes de carbone, et leurs mélanges, de préférence dans le groupe constitué par le trimyristate de glycérol, le tripalmitate de glycérol, le monostéarate de glycérol, le cétylpalmitate de glycérol et leurs mélanges.

Selon un mode de réalisation particulier, le matériau thermo-expansible comprend en outre des phosphatides dérivés de lécithine, comme par exemple la phosphatidylcholine et la phosphatidyléthanilamine.

A titre de matériau thermo-expansible utilisable dans le cadre de la présente invention, on peut notamment citer la cire SUPPOCIRE® DM Pastilles de la société GATTEFOSSE.

Selon un autre mode de réalisation préféré, le matériau thermo-expansible est un fluorocarbone.

Un fluorocarbone considéré dans le cadre de la présente invention est d'une manière générale un composé organique dans lequel au moins une partie des atomes d'hydrogène sont remplacés par des atomes de fluor.

Un fluorocarbone considéré est par exemple un composé organique dans lequel tous les atomes d'hydrogène sont remplacés par des atomes de fluor, on parle alors de perfluorocarbone.

Les fluorocarbones peuvent être solides ou liquides à température ambiante (entre 20°C et 25°C), voire présenter un point d'ébullition inférieur ou égal à 200°C.

Les fluorocarbones sont des matériaux thermo-expansibles, qui se dilatent notamment lors de leurs changements d'état solide → liquide et/ou liquide → gaz.

Selon une variante, le matériau thermo-expansible est un fluorocarbone solide à température ambiante (entre 20°C et 25°C).

Selon cette variante, T2 est de préférence supérieure ou égale au point de fusion du fluorocarbone.

Selon cette variante, la libération du composé A encapsulé est typiquement initiée en soumettant les capsules à une température supérieure ou égale au point de fusion du fluorocarbone utilisé comme matériau thermo-expansible. Le changement d'état solide → liquide du fluorocarbone provoque une dilatation de la composition C2 et ainsi une rupture de l'enveloppe rigide polymérisée.

Selon une autre variante, le matériau thermo-expansible est un fluorocarbone liquide à température ambiante (entre 20°C et 25°C).

Selon cette variante, T2 est typiquement égale à la température ambiante.

Selon cette variante, T4 est également typiquement égale à la température ambiante.

Selon cette variante, la libération du composé A encapsulé est typiquement initiée en soumettant les capsules à une température supérieure au point d'ébullition du fluorocarbone utilisé comme matériau thermo-expansible. Le changement d'état liquide → gaz du fluorocarbone provoque une dilatation de la composition C2 et ainsi une rupture de l'enveloppe rigide polymérisée.

Les fluorocarbones convenant à l'invention peuvent présenter un point de fusion supérieur ou égal à 35°C, en particulier supérieur ou égal à 40°C, de préférence supérieur ou égal à 45°C, préférentiellement supérieur ou égal à 50°C, avantageusement supérieur ou égal à 60°C, voire supérieur ou égal à 70°C, ou encore à 80°C, à 90°C, ou à 100°C.

Les fluorocarbones convenant à l'invention peuvent présenter un point d'ébullition supérieur ou égal à 80°C, en particulier supérieur ou égal à 90°C, de préférence supérieur ou égal à 100°C, préférentiellement supérieur ou égal à 150°C, avantageusement supérieur ou égal à 180°C.

On peut citer par exemple les composés aromatiques fluorés en $C_6$-$C_{20}$, les hydrocarbures linéaires ou cycliques fluorés en $C_6$-$C_{20}$, les hydrocarbures linéaires insaturés fluorés en $C_6$-$C_{20}$, les esters fluorés en $C_3$-$C_{20}$ (esters d'acide formique, d'acide acétique ou d'acide butyrique), les éthers fluorés en $C_3$-$C_{20}$, les cétones fluorées en $C_3$-$C_{20}$, et les carbonates fluorés en $C_3$-$C_{20}$ (éthylène carbonate, propylène carbonate, butylène carbonate, ...).

Par « fluoré », on entend que le composé organique est porteur d'au moins un atome de fluor, typiquement de 1 à 20 atomes de fluor, de préférence de 2 à 10 atomes de fluor, par exemple de 3 à 10.

A titre d'exemple, on peut citer (« mp » étant le point de fusion et « bp » étant le point d'ébullition du matériau) :

- les benzophénones fluorées, telles que décafluorobenzophénone (bp: 206°C, mp: 92-94°C) et 4,4'-difluorobenzophénone (bp: 170°C (10 torr), mp: 106-109°C),

- les benzènes fluorés, tels que hexafluorobenzène (bp : 80°C), 1,3-bis(trifluorométhyl)benzène (bp: 116°C, mp: 35°C), allylpentafluorobenzène (bp: 148-149°C, mp: 64°C), 1,2,3,4-tétrafluorobenzène (bp: 95°C, mp: 42°C), 1,2,3,5-tétrafluorobenzène (bp: 83°C, mp: 48°C), 1,2,4,5-tétrafluorobenzène (bp: 90°C, mp: 4°C), 1,2,3-trifluorobenzène (bp: 94-95°C), 1,2,4-trifluorobenzène (bp: 88-91°C, mp: 12°C), 1,3,5-trifluorobenzène (bp: 75-76°C, mp: 5,5°C), 1,2-difluorobenzène (bp: 92°C, mp: 34°C), 1,3-difluorobenzène (bp: 83°C, mp: 59°C), 1,4-difluorobenzène (bp: 88-89°C, mp: 13°C), fluorobenzène (bp: 85°C, mp: 42°C), (trifluorométhoxy)benzène (bp: 102°C), 1-éthynyl-4-fluorobenzène (bp: 55°C (40 mmHg), mp: 27-28°C), 1,4-bis(difluorométhyl)benzène (bp: 70°C (2,7 KPa)), 1-acétoxy-4-fluorobenzène (bp: 197°C), et 2,4,6-triméthylfluorobenzène (bp: 163-165°C),

- les toluènes fluorés, tels que octafluorotoluène (bp: 104°C, mp: 65,6°C), α,α,α-trifluorotoluène (bp: 102°C, mp: 29°C), 2,6-difluorotoluène (bp: 112°C), o-fluorotoluène (bp: 114°C, mp: 62°C), m-fluorotoluène (bp: 115°C, mp: 87°C), p-fluorotoluène (bp: 116°C, mp: 53°C), et 2,4-difluorotoluène (bp: 114-116°C),
- les xylènes fluorés, tels que 3-fluoro-o-xylène (bp: 148-152°C),
- les naphtalènes fluorés, tels que octafluoronaphtalène (bp: 209°C, mp: 87-88°C) et 1-fluoronaphtalène (bp: 215-217°C, mp: 13°C),
- les styrènes fluorés tels que 2-fluorostyrène (bp: 29-30°C) et 4-fluorostyrène (bp: 67°C (50 mmHg), mp: 36°C),
- les décalines fluorées telles que perfluorodécaline (mélange de cis et trans, bp: 142°C, mp: 10°C),
- les hydrocarbures linéaires ou cycliques, tels que 1-fluorohexane (bp: 93°C), perfluoro-1,3-diméthylcyclohexane (bp: 101-102°C, mp: 55°C), 1-fluoropentane (bp: 62-63°C), 1-fluorononane (bp: 166-169°C), et perfluoro-2-méthyl-2-pentène (bp: 53-61 °C), (perfluorobutyl)éthylène (bp: 58°C), et
- les esters fluorés tels que éthyl fluoroacétate (bp: 117°C), éthyl 4,4,4-trifluoroacétoacétate (bp: 131°C, mp: 39°C), et méthyl 2-fluorophénylacétate

De préférence, le fluorocarbone est choisi dans le groupe constitué de 1,2-difluorobenzène, hexafluorobenzène, perfluoro-1,3-diméthylcyclohexane et o-fluorotoluène.

Il est intéressant d'utiliser un fluorocarbone à titre de matériau thermo-expansible dans les cas où l'on ne pourrait pas utiliser une cire, par exemple lorsque l'on souhaite encapsuler un composé lipophile qui serait miscible avec les cires.

De plus, l'utilisation d'un fluorocarbone présentant un point d'ébullition relativement faible (typiquement inférieur ou égal à 120°C) permet d'éliminer facilement par évaporation le matériau thermo-expansible, typiquement lors du procédé de libération du composé A encapsulé (ce procédé sera détaillé ci-après).

Selon un mode de réalisation, la composition C2 comprend, outre le matériau thermo-expansible, au moins une polyoléfine, de préférence une poly-alpha-oléfine.

Les poly-alpha-oléfines sont une famille de polyoléfines (polyalcènes) issues d'oléfines ayant une double liaison en position alpha.

La présence d'une polyoléfine dans la composition C2 permet d'ajuster avantageusement sa viscosité à la viscosité souhaitée, et/ou d'ajuster le point de fusion de la composition C2.

Lorsque le matériau thermo-expansible a tendance à cristalliser lorsqu'il refroidit, l'utilisation d'une polyoléfine permet avantageusement d'éviter la formation de cristaux et d'obtenir des capsules spériques.

A titre de polyoléfine utilisable dans le cadre de la présente invention, on peut notamment citer la poly-alpha-oléfine SYNTON® PAO 100 de la société CHEMTURA.

La polyoléfine est typiquement présente selon une teneur comprise de 5% à 60% en poids par rapport au poids total de la composition C2.

Selon un mode de réalisation, la composition C2 comprend, outre le matériau thermo-expansible, un hydrocarbure liquide, aliphatique ou aromatique, naturel ou synthétique, comme par exemple une huile minérale.

La présence d'un hydrocarbure liquide permet de diluer avantageusement le matériau thermo-expansible, pour adapter la viscosité de la composition C2.

## Etape b)

Lors de l'étape b), on additionne, de préférence au goutte-à-goutte, l'émulsion obtenue à l'issue de l'étape a), à une composition liquide C3 portée à la température T3.

A la température T3, les compositions C2 et C3 ne sont pas miscibles l'une dans l'autre. Ainsi, lorsque l'émulsion C1-dans-C2 entre en contact avec la composition C3 sous agitation, il se forme des gouttes dites doubles.

Sur les Figures 1 et 2, les gouttes 10 et 15 sont des représentations schématiques de gouttes doubles susceptibles d'être obtenues.

Généralement, une goutte double formée correspond à une goutte simple précédemment formée, entourée d'une enveloppe de composition C2 disposée autour de ladite goutte simple, lesdites gouttes doubles étant dispersées dans la composition C3. L'émulsion obtenue est aussi appelée « émulsion double» ou émulsion C1-dans-C2-dans-C3.

Selon un mode de réalisation, une goutte double formée correspond à plusieurs gouttes simples précédemment formées, entourées par une seule et même enveloppe de composition C2 disposée autour de ladite goutte simple, lesdites gouttes doubles étant dispersées dans la composition C3.

Ainsi, le cœur des gouttes doubles formées est composé d'une ou de plusieurs gouttes de composition C1.

L'émulsion obtenue est aussi appelée « émulsion double » ou émulsion C1-dans-C2-dans-C3.

De préférence, à la température T3, les compositions C1 et C3 ne sont pas miscibles l'une dans l'autre, notamment dans le cas de la première variante décrite ci-dessus où la composition C1 est monophasique. Ceci a pour avantage d'éviter que les gouttes doubles formées ne se déstabilisent en cas de rupture ou de déstabilisation de l'enveloppe de composition C2, ce qui entrainerait une fuite du composé A et une contamination de la composition C3.

Pour mettre en œuvre l'étape b), on peut utiliser tout type d'agitateur usuellement utilisé pour former des émulsions, comme par exemple un homogénéisateur à ultrasons, un homogénéisateur à membrane, un homogénéisateur à haute pression, un moulin colloïdal, un disperseur à haut pouvoir de cisaillement ou un homogénéisateur à haute vitesse.

Avant l'addition de l'émulsion C1-dans-C2, la composition C3 est portée à une température T3 telle que la composition C3 est sous forme liquide.

A la température T3, la composition C3 présente typiquement une viscosité supérieure ou égale à 800 cP, de préférence comprise de 800 cP à 150000 cP, préférentiellement 10 000 cP à 60 000 cP.

De préférence, à la température T3, la composition C3 est plus visqueuse que l'émulsion C1-dans-C2. Ceci permet une formation améliorée de l'émulsion C1-dans-C2-dans-C3, sans phénomène de coalescence de gouttelettes d'émulsion C1-dans-C2.

La température T3 est typiquement supérieure ou égale à 10°C, de préférence supérieure ou égale à 20°C, avantageusement comprise de 30°C à 200°C, préférentiellement comprise de 30°C à 100°C.

La température T3 est par exemple égale à la température T2.

La température T3 est par exemple comprise de 20°C à 40°C.

La température T3 peut être adaptée selon les cas, mais est telle que la composition C3 reste liquide à cette température. De préférence, la température T3 est telle qu'elle n'altère pas les constituants des compositions C1 ou C2, et/ou qu'elle ne fait pas s'évaporer les solvants éventuellement présents dans la composition C1.

La **composition** C3 est apte à être polymérisée.

Dans le cadre de la présente invention, on entend par « composition apte à être polymérisée », une composition qui polymérise sous certaines conditions pour former un matériau solide et rigide.

Selon l'invention, la polymérisation correspond à une réticulation. Cette réaction de polymérisation (ou réticulation) est différente d'une réaction de coacervation.

La coacervation correspond à la formation d'un complexe au sein duquel les espèces chimiques sont liées entre elles par des liaisons électrostatiques réversibles par une modification simple du solvant (par exemple un changement de pH ou de concentration en sel). Or, en comparaison, la réticulation selon l'invention correspond à la formation de liaisons chimiques fortes entre les espèces chimiques. Ces liaisons ne peuvent être détruites que par des procédés destructifs tels que le chauffage à forte température. De ce fait, les propriétés de résistance mécanique telles que la rigidité sont bien supérieures dans un matériau réticulé que dans un coacervat.

Selon un mode de réalisation, la composition C3 comprend au moins un monomère insaturé ou de pré-polymère insaturé, un agent réticulant et un photoamorceur.

Selon ce mode de réalisation, la composition C3 comprend typiquement de 50% à 95% en poids de monomère insaturé ou un pré-polymère insaturé, par rapport au poids total de ladite composition C3.

Selon ce mode de réalisation, la composition C3 comprend typiquement de 1% à 20% en poids d'agent réticulant, par rapport au poids total de ladite composition C3.

Selon ce mode de réalisation, la composition C3 comprend typiquement de 0,1% à 5% en poids de photoamorceur, par rapport au poids total de ladite composition C3.

Par « monomère insaturé », on entend un monomère porteur d'au moins une insaturation, typiquement éthylénique, susceptible de polymériser pour fournir un matériau solide et rigide.

A titre de monomère insaturé, on peut notamment citer les monomères porteurs d'au moins une fonction (méth)acrylate. Ces monomères peuvent également porter une ou plusieurs fonctions choisies dans le groupe constitué des fonctions alkylamines primaires, secondaires et tertiaires, des fonctions amines quaternaires, des fonctions sulfate, sulfonate, phophate, phosphonate, carboxylate, hydroxyle, halogène, et leurs mélanges.

Par « pré-polymère insaturé », on entend un polymère ou oligomère porteur d'au moins une insaturation, typiquement éthylénique, susceptible de polymériser pour fournir un matériau solide et rigide.

A titre de pré-polymère insaturé, on peut notamment citer les pré-polymères porteurs de fonctions (méth)acrylate, comme les polyuréthanes, polyesters, polyurées, polyéthers, et polydiméthylsiloxanes, porteurs de fonctions (méth)acrylate.

Par « agent réticulant », on entend un composé porteur d'au moins deux fonctions réactives susceptibles de réticuler un monomère insaturé ou un pré-polymère insaturé lors de sa polymérisation.

A titre d'agent réticulant, on peut notamment citer les diacrylates, comme l'1,6-hexanediol diacrylate.

Par « photoamorceur », on entend un composé capable de se fragmenter sous l'effet d'un rayonnement lumineux et d'initier la polymérisation d'un monomère insaturé ou d'un pré-polymère insaturé.

Les photoamorceurs utilisables selon la présente invention sont connus dans la technique et sont décrits, par exemple dans "Les photoinitiateurs dans la réticulation des revêtements", G. Li Bassi, Double Liaison - Chimie des Peintures, n°361, novembre 1985, p.34-41 ; "Applications industrielles de la polymérisation photoinduite", Henri Strub, L'Actualité Chimique, février 2000, p.5-13 ; et "Photopolymères : considérations théoriques et réaction de prise", Marc, J.M. Abadie, Double Liaison - Chimie des Peintures, n°435-436, 1992, p.28-34.

Ces photoamorceurs englobent :

- les α-hydroxycétones, commercialisées par exemple sous les dénominations DAROCUR® 1173 et 4265, IRGACURE® 184, 2959, et 500 par la société BASF, et ADDITOL® CPK par la société CYTEC,
- les α-aminocétones, commercialisées par exemple sous les dénominations IRGACURE® 907 et 369 par la société BASF,
- les cétones aromatiques commercialisées par exemple sous la dénomination ESACURE® TZT par LAMBERTI. On peut également citer les thioxanthones commercialisées par exemple sous la dénomination ESACURE® ITX par LAMBERTI, et les quinones. Ces cétones aromatiques nécessitent le plus souvent la présence d'un composé donneur d'hydrogène tel que les amines tertiaires et notamment les alcanolamines. On peut notamment citer l'amine tertiaire ESACURE® EDB commercialisée par la société LAMBERTI.
- les dérivés α-dicarbonyles dont le représentant le plus courant est le benzyldiméthylcétal commercialisé sous la dénomination IRGACURE® 651 par BASF. D'autres produits commerciaux sont commercialisés par la société LAMBERTI sous la dénomination ESACURE® KB1, et
- les oxydes d'acylphosphine, tels que par exemple les oxydes de bis-acylphosphine (BAPO) commercialisés par exemple sous les dénominations IRGACURE® 819, 1700, et 1800, DAROCUR® 4265, LUCIRIN® TPO, et LUCIRIN® TPO-L par la société BASF.

De préférence, la composition C3 comprend :

- un pré-polymère polyuréthane porteur de fonctions acrylate,
- un diacrylate d'alkylènediol, et
- un photoamorceur de type α-hydroxycétone.

Selon un mode de réalisation préféré, la composition C3 est destinée à former, une fois polymérisée lors de l'étape d), une enveloppe de polyacrylate.

Selon un mode de réalisation, la composition C3 comprend des oligomères de type polyester ou polyuréthane ou polyurée ou polyéther ou polydiméthylsiloxane, porteurs de fonctions acrylates terminales ou pendantes, ainsi qu'un photoamorceur.

Selon un mode de réalisation, la composition C3 comprend des oligomères polyesters insaturés, du styrène, ainsi qu'un photoamorceur.

Selon un mode de réalisation, la composition C3 comprend des mercaptoesters et des thiolènes, et un photoamorceur.

Selon un mode de réalisation, la composition C3 comprend des époxydes multifonctionnelles ou des éthers cycliques ou des siloxanes cycliques ou des oxétanes, ou des éthers vinyliques, ainsi qu'un photoamorceur cationique.

**Etape c)**

Lors de l'étape c), on additionne, de préférence au goutte-à-goutte, l'émulsion obtenue à l'issue de l'étape b), à une composition liquide C4 portée à la température T4.

A la température T4, les compositions C3 et C4 ne sont pas miscibles l'une dans l'autre. Ainsi, lorsque l'émulsion C1-dans-C2-dans-C3 entre en contact avec la composition C4 sous agitation, il se forme des gouttes dites triples.

Sur les Figures 1 et 2, les gouttes 20 et 25 sont des représentations schématiques de gouttes triples susceptibles d'être obtenues.

Selon un mode de réalisation, une goutte triple formée correspond à une goutte double précédemment formée, entourée d'une enveloppe externe de composition C3 disposée autour de ladite goutte double, ladite goutte triple étant dispersée dans la composition C4. L'émulsion obtenue est aussi appelée « émulsion triple » ou émulsion C1-dans-C2-dans-C3-dans-C4.

Selon ce mode, lorsque la goutte double comprend une seule goutte de composition C1 à titre de cœur, la goutte triple obtenue possède un cœur composé d'une goutte de composition C1, une enveloppe interne de composition C2 disposée autour dudit cœur, et une enveloppe externe de composition C3 disposées autour de ladite enveloppe interne, lesdites gouttes étant dispersées dans la composition C4.

Selon ce mode, lorsque la goutte double comprend plusieurs gouttes de composition C1 à titre de cœur, la goutte triple obtenue possède un cœur composé de plusieurs gouttes de composition C1, entourées par une seul et même enveloppe interne de composition C2 disposée autour dudit cœur, et une enveloppe externe de composition C3 disposées autour de ladite enveloppe interne, lesdites gouttes étant dispersées dans la composition C4.

Selon un autre mode de réalisation, une goutte triple formée correspond à plusieurs gouttes doubles précédemment formées, entourée d'une seule et même enveloppe externe de composition C3 disposée autour desdites gouttes doubles, ladite goutte triple étant dispersée dans la composition C4.

Par « enveloppe externe disposée autour de ladite enveloppe interne », on entend que l'enveloppe externe entoure (ou encercle), de préférence totalement, ladite enveloppe interne de sorte que celle-ci ne peut s'échapper de l'enceinte formée par ladite enveloppe externe. De préférence, l'enveloppe externe qui entoure ladite enveloppe interne est disposée à son contact. On dit aussi que l'enveloppe interne est « encapsulée » dans l'enveloppe externe.

De préférence, à la température T4, les compositions C4 et C2 ne sont pas miscibles l'une dans l'autre. Ceci a pour avantage d'éviter que les gouttes triples formées ne se déstabilisent en cas de rupture ou de déstabilisation de l'enveloppe de composition C3, ce qui entrainerait une fuite du composé A et une contamination de la composition C4.

A la température T4, les compositions C4 et C1 peuvent être miscibles l'une dans l'autre ou non.

Pour mettre en œuvre l'étape c), on peut utiliser tout type d'agitateur usuellement utilisé pour former des émulsions, comme par exemple un homogénéisateur à ultrasons, un homogénéisateur à membrane, un homogénéisateur à haute pression, un moulin colloïdal, un disperseur à haut pouvoir de cisaillement ou un homogénéisateur à haute vitesse.

Avant l'addition de l'émulsion C1-dans-C2-dans-C3, la composition C4 est portée à une température T4 telle que la composition C4 est sous forme liquide, ladite température T4 étant inférieure ou égale à la température T2 et inférieure ou égale à la température T3.

Selon un mode de réalisation, la température T4 est inférieure d'au moins 10°C, voire d'au moins 15°C, aux températures T2 et T3.

Typiquement, la température T4 est inférieure ou égale à 30°C, de préférence comprise de 0°C à 30°C, préférentiellement de 15°C à 30°C.

La température T4 est par exemple comprise de 20°C à 25°C.

Selon un autre mode de réalisation, la température T4 est égale à T2 et/ou à T3.

Dans ce cas, T4 est typiquement égale à la température ambiante (compris entre 20°C et 25°C).

Quand T4 est inférieure à la température de l'émulsion C1-dans-C2-dans-C3, lorsque ladite émulsion entre en contact avec ladite composition C4, la température du matériau thermo-expansible diminue, si bien que l'enveloppe de composition C2 se contracte. L'enveloppe de composition liquide C3 qui encapsule l'enveloppe de composition C2 est dans un état non polymérisé et suit la variation de volume de l'enveloppe qu'elle encapsule.

De préférence, en passant à la température T4, la composition C2 se contracte et se solidifie. C'est notamment le cas lorsque la composition C2 comprend, à titre de matériau thermo-expansible, un matériau (tel qu'une cire) ayant un point de fusion compris entre T4 et T2.

Quand T4 est égale à T2 et à T3, la composition C2 ne se contracte pas et il n'y a pas de changement d'état du matériau thermo-expansible.

C'est typiquement le cas lorsque le matériau thermo-expansible est un fluorocarbone dont le point de fusion est inférieur ou égal à T4 (ou donc T2).

De préférence, à la température T4, la composition C4 présente une viscosité inférieure ou égale à celle de la composition C3.

De préférence, à la température T4, la composition C4 présente une viscosité inférieure ou égale à celle de la composition C2.

De préférence, à la température T4, la composition C4 présente une viscosité supérieure ou égale à celle de la composition C1.

De préférence, à la température T4, la composition C4 présente une viscosité inférieure ou égale à celle de l'émulsion C1-dans-C2-dans-C3. Ceci permet d'éviter les phénomènes d'inversion de phase.

Selon un mode de réalisation, la composition C4 est dépourvue de composé réactif.

Selon ce mode de réalisation, la composition C4 a typiquement la même composition que le solvant ou mélange de solvants dans lequel le composé A est solubilisé au sein de la composition C1.

Selon un autre mode de réalisation, la composition C4 comprend au moins un composé B, différent du composé A, apte à réagir avec le composé A.

Selon ce mode, la composition C4 est typiquement une solution comprenant un solvant organique ou un mélange de solvants organiques dans laquelle le composé B est sous forme soluble.

Le composé B peut être présent selon une teneur de 0,01% à 100% en poids par rapport au poids total de la composition C4.

La dilution du composé B dans la composition C4 est adaptée en fonction de la viscosité recherchée pour cette composition.

Le composé B peut être un catalyseur, un monomère, un pré-polymère, un agent réticulant.

**Etape d)**

Lors de l'étape d), on polymérise la composition C3 (et la composition C'3 lorsque celle-ci est présente), plus précisément l'enveloppe de composition C3 (et l'enveloppe de composition C'3 lorsque celle-ci est présente), pour rigidifier les gouttes de l'émulsion C1-dans-C2-dans-C3-dans-C4 obtenue à l'issue de l'étape c) et obtenir des capsules solides.

On forme ainsi une enveloppe externe rigide polymérisée, aussi appelée écorce ou matrice polymérique, autour des gouttes. Les objets formés s'apparentent alors à des capsules solides ayant une écorce rigide qui permet de stabiliser la structure interne et de maintenir l'isolement du composé A contenu dans le cœur. La structure des capsules obtenues permet d'éviter toute déstabilisation ou toute fuite du composé A au cours du temps, tant qu'aucune élévation substantielle de température n'est imposée.

Dans les modes de réalisation où les gouttes possèdent plusieurs enveloppes de composition C3 polymérisables, on forme lors de l'étape d) autant d'enveloppes polymérisées.

Les capsules solides obtenues peuvent rester en suspension dans le *bulk* constitué par la composition C4 jusqu'au moment choisi pour la libération du composé A.

Les capsules solides obtenues présentent l'avantage de posséder plusieurs (au moins 2) enveloppes entre le cœur contenant le composé A et le milieu extérieur (duquel le composé A doit être isolé), ce qui permet d'éviter toute contamination du milieu extérieur.

Du fait de l'imperméabilité des enveloppes, le composé A est avantageusement isolé du milieu extérieur au cœur des capsules obtenues, ce qui permet d'éviter toute réaction non désirée.

De plus, même si l'une des enveloppes des capsules se déstabilise (typiquement une enveloppe de composition C2), le cœur des capsules sera de toute façon retenu par la ou les autres enveloppes (notamment l'enveloppe externe rigide polymérisée).

Contrairement aux méthodes existantes, le procédé de l'invention permet de réduire les coûts associés à la séparation des composés dans des conditionnements séparés.

De plus, le procédé de la présente invention se base sur une technologie en *bulk,* qui est compatible avec les contraintes de volume de l'échelle industrielle.

Un moyen de libérer le composé A est de chauffer les capsules solides, ce qui dilate l'enveloppe de composition C2 comprenant le matériau thermo-expansible, imposant ainsi un stress mécanique sur la ou les enveloppe(s) rigide(s) polymérisée(s) des capsules solides.

Selon un mode de réalisation, l'étape d) est effectuée par exposition des gouttes obtenues à l'issue de l'étape c) à un rayonnement lumineux apte à polymériser la composition C3 (et la composition C'3 éventuellement présente).

Selon un mode de réalisation, les capsules solides obtenues à l'issue de l'étape d) sont dépourvues d'eau et/ou de tensioactif.

Le procédé de l'invention présente l'avantage de ne pas nécessiter d'eau, dans aucune des étapes décrites. Le procédé de l'invention permet ainsi d'encapsuler des composés sensibles à l'eau.

Le procédé de l'invention présente l'avantage de ne pas nécessiter de tensioactif, dans aucune des étapes décrites. Le procédé de l'invention permet ainsi de réduire la présence d'additifs qui pourraient modifier les propriétés du produit final obtenu après libération du composé A.

La taille des capsules solides dépend du type, de la géométrie, et de la vitesse de l'appareil utilisé pour émulsionner, mais aussi de la viscosité des compositions et du délai entre l'étape c) et l'étape d). L'homme du métier pourra adapter ces paramètres en fonction de la taille moyenne de particules souhaitée.

La taille moyenne des capsules solides susceptibles d'être obtenues selon le procédé de l'invention est généralement comprise de 0, 1 $\mu$m à 100 $\mu$m.

La taille des capsules solides est typiquement mesurée en utilisant un microscope optique ou un microscope électronique à transmission, et un logiciel de traitement d'image. Alternativement, on peut utiliser d'autres techniques de mesure, basées sur la centrifugation ou la diffusion dynamique de la lumière.

Pour mettre en œuvre les étapes a), b) et c), on utilise typiquement un agitateur de type homogénéisateur à haute vitesse, par exemple un T 25 ULTRA-TURRAX de la société IKA.

Les ratios massiques entre les compositions C1, C2, C3 et C4 peuvent être adaptés par l'homme du métier en fonction de la viscosité des compositions, de la stabilité des émulsions, de la taille des capsules souhaitées, et de la concentration en composé A souhaitée dans le mélange final issu de l'étape d).

Typiquement, le ratio massique C1:C2 est compris de 0,01 à 5,0, de préférence de 0,1 à 1,0, préférentiellement de 0,1 à 0,5. Le ratio massique C1:C2 est par exemple égal à 0,25.

Typiquement, le ratio massique C2:C3 est compris de 0,1 à 20,0, de préférence de 1,0 à 10,0, préférentiellement de 1,0 à 5,0. Le ratio massique C2:C3 est par exemple égal à 2,0.

Typiquement, le ratio massique C3:C4 est compris de 0,1 à 20,0, de préférence de 1,0 à 10,0, préférentiellement de 1,0 à 5,0. Le ratio massique C2:C3 est par exemple égal à 2,0.

Typiquement, le ratio massique (C1+C2+C3):C4 est compris de $10^{-5}$ à 1,0, de préférence de $10^{-4}$ à 1,0, préférentiellement de $10^{-3}$ à 1,0, voire de 0,01 à 1,0, notamment de 0,1 à 1,0.

## Capsules

Selon un autre objet, la présente invention concerne les capsules solides susceptibles d'être obtenues par le procédé de l'invention.

La présente invention concerne les capsules solides susceptibles d'être obtenues par la première variante du procédé de l'invention selon la revendication 8, définie ci-dessus, lesdites capsules comprenant :

- un cœur comprenant une solution comprenant le composé A,
- une enveloppe interne comprenant un matériau thermo-expansible, disposée autour dudit coeur, ledit matériau thermo-expansive état choisi dans le groupe constitué des cires, des fluorocarbones, et leurs mélanges et
- une enveloppe externe rigide polymérisée disposée autour de ladite enveloppe interne, ladite enveloppe externe rigide polymérisée n'étant pas obtenue par coacervation.

Selon un mode de réalisation, les capsules solides susceptibles d'être obtenues par la première variante du procédé de l'invention comprennent un cœur formé d'une seule goutte, entouré d'une seule enveloppe interne, elle-même entourée d'une seule enveloppe externe rigide polymérisée. La Figure 3 représente de manière schématique une capsule solide obtenue selon ce mode (capsule 40).

Selon un autre mode de réalisation, les capsules solides susceptibles d'être obtenues par la première variante du procédé de l'invention comprennent un cœur formé de plusieurs gouttes, lesdites gouttes étant entourées par une seule et même enveloppe interne, elle-même entourée d'une seule enveloppe externe rigide polymérisée. La Figure 3 représente de manière schématique une capsule solide obtenue selon ce mode (capsule 41).

Selon un autre mode de réalisation, les capsules solides susceptibles d'être obtenues par la première variante du procédé de l'invention comprennent un cœur formé de plusieurs gouttes, chacune desdites gouttes étant entourées par une enveloppe interne distincte, lesdites enveloppes internes étant entourée d'une seule enveloppe externe rigide polymérisée. La Figure 3 représente de manière schématique une capsule solide obtenue selon ce mode (capsule 42).

Selon l'invention, l'enveloppe externe rigide polymérisée susmentionnée des capsules solides solides susceptibles d'être obtenues par la première variante du procédé de l'invention n'est pas obtenue par coacervation. De préférence, ladite enveloppe externe rigide polymérisée ne comprend donc pas de coacervat et n'est donc pas constituée par un coacervat.

Selon un mode de réalisation, cette enveloppe externe rigide polymérisée est une enveloppe externe rigide réticulée, et donc obtenue par réticulation.

De préférence, l'enveloppe externe rigide polymérisée de ces capsules solides est obtenue par polymérisation d'au moins un monomère insaturé ou de prépolymère insaturé, un agent réticulant et un photoamorceur, tels que définis plus haut.

Selon l'invention, les capsules solides susmentionnées, susceptibles d'être obtenues par la première variante du procédé de l'invention, comprennent une enveloppe interne telle que définie ci-dessus dans laquelle le matériau thermo-expansible est choisi dans le groupe constitué des cires, des fluorocarbones, et de leurs mélanges, comme décrit plus haut.

Selon l'invention, le terme « enveloppe rigide » désigne une enveloppe ayant des propriétés mécaniques particulières, à savoir de préférence présentant un module d'Young d'au moins 50 MPa, et préférentiellement compris entre 50 MPa et 500 GPa.

La présente invention concerne également les capsules solides susceptibles d'être obtenues par la deuxième variante du procédé de l'invention définie ci-dessus, lesdites capsules comprenant :

- un cœur comprenant une solution comprenant le composé A,
- une enveloppe interne rigide polymérisée disposée autour dudit cœur,
- une enveloppe intermédiaire comprenant un matériau thermo-expansible, disposée autour de ladite enveloppe interne rigide polymérisée, ledit matériau thermo-expansive état choisi dans le groupe constitué des cires, des fluorocarbones, et leurs mélanges et
- une enveloppe externe rigide polymérisée disposée autour de ladite enveloppe intermédiaire, ladite enveloppe externe rigide polymérisée n'étant pas obtenue par coacervation.

Selon un mode de réalisation, les capsules solides susceptibles d'être obtenues par la deuxième variante du procédé de l'invention comprennent un cœur formé d'une seule goutte, entouré d'une seule enveloppe interne rigide polymérisée, elle-même entourée d'une seule enveloppe intermédiaire, elle-même entourée d'une seule enveloppe externe rigide polymérisée. La Figure 4 représente de manière schématique une capsule solide obtenue selon ce mode (capsule 50).

Selon un autre mode de réalisation, les capsules solides susceptibles d'être obtenues par la deuxième variante du procédé de l'invention comprennent un cœur formé de plusieurs gouttes, lesdites gouttes étant entourées par une seule et même enveloppe interne rigide polymérisée, elle-même entourée d'une seule enveloppe intermédiaire, elle-même entourée d'une seule enveloppe externe rigide polymérisée. La Figure 4 représente de manière schématique une capsule solide obtenue selon ce mode (capsule 51).

Selon un autre mode de réalisation, les capsules solides susceptibles d'être obtenues par la deuxième variante du procédé de l'invention comprennent un cœur formé de plusieurs gouttes, chacune desdites gouttes étant entourée par une enveloppe interne rigide polymérisée distincte, lesdites enveloppes internes étant entourées d'une seule enveloppe intermédiaire, elle-même entourée d'une seule enveloppe externe rigide polymérisée. La Figure 4 représente de manière schématique une capsule solide obtenue selon ce mode (capsule 52).

Selon l'invention, les capsules solides susmentionnées, susceptibles d'être obtenues par la deuxième variante du procédé de l'invention, comprennent une enveloppe intermédiaire telle que définie ci-dessus dans laquelle le matériau thermo-expansible est choisi dans le groupe constitué des cires, des fluorocarbones, et de leurs mélanges, comme décrit plus haut.

La présente demande décrit aussi les capsules solides susceptibles d'être obtenues par la troisième variante du procédé de l'invention définie ci-dessus, lesdites capsules comprenant :

- un cœur comprenant une solution comprenant le composé A, et
- un empilement d'enveloppes comprenant un matériau thermo-expansible et d'enveloppes rigides polymérisées, lesdites enveloppes étant disposées en alternance autour dudit cœur.

La Figure 5 représente de manière schématique des exemples de capsules susceptibles d'être obtenues selon cette variante du procédé (capsules 60, 61 et 62).

**Composition**

Selon un autre objet, la présente invention concerne une composition comprenant des capsules solides susceptibles d'être obtenues par le procédé de l'invention.

La présente invention concerne ainsi une composition comprenant au moins une capsule solide obtenue selon l'une des variantes du procédé de l'invention, ladite capsule étant dispersée dans une phase liquide continue, correspondant de préférence à la composition C4 définie ci-dessus.

De manière alternative, les capsules sont en suspension dans une phase liquide continue qui diffère de la composition C4 utilisée dans l'étape c) du procédé.

Selon un mode de réalisation préféré, la phase liquide continue comprend au moins un composé B, différent du composé A, apte à réagir avec le composé A.

Selon ce mode de réalisation, le procédé de l'invention a pour avantage de permettre aux deux composés A et B d'être présents dans la même formulation sans réagir, jusqu'à ce qu'un déclenchement soit appliqué pour initier la libération du composé A encapsulé et ainsi la réaction entres lesdits deux composés A et B.

Ainsi, le procédé de l'invention permet aussi d'assurer que les composés A et B sont finalement mis en présence selon la concentration optimale, en minimisant les erreurs de dosage de l'utilisateur.

Les couples de composés A/B mis en œuvre dans le procédé de l'invention sont par exemple les couples résine époxy/durcisseur, monomère/catalyseur de polymérisation, ou monomère M1/monomère M2, M1 et M2 étant aptes à polymériser ensemble.

Les composés A susceptibles d'être utilisés dans le cadre de la présente invention sont par exemple les composés isocyanates, les $\beta$-hydroxyl alkylamides, les glycidyl esters trimélllitiques, et les mélamines et leurs dérivés éthérifiés.

Les composés B susceptibles d'être utilisés dans le cadre de la présente invention sont par exemple les polyamides, les polyamines, les polyesters à fonction hydroxy, les polyéthers, et les polyuréthanes.

Selon un mode de réalisation, le composé A est un catalyseur apte à réticuler le composé B.

A titre d'exemple de catalyseur utilisable comme composé A, on peut citer :

- les péroxydes et les hydropéroxydes, aptes à réticuler des polyesters insaturés,
- les durcisseurs de type amine, tels que les polyamines et les polyaminoamines, les anhydrides comme par exemple l'anhydride phtalique, et les thiols, aptes à réticuler des résines époxy,
- les catalyseurs métalliques, comme le dilaurate de dibutylétain, aptes à réticuler des polyester et/ou des polyisocyanates,
- les hydroxyméthylphénols substitués et les aminométhylphénols substitués, aptes à réticuler des époxy et/ou des polyuréthanes, et
- les catalyseurs organométalliques, comme les organostanniques, les carboxylates de bismuth, les organotitanes, les acétylacétonates de zinc, et les acétylacétonates d'aluminium, aptes à réticuler des gommes de silicone.

Le procédé de la présente invention s'applique à toutes les réactions dans lesquelles il est nécessaire qu'au moins deux composés soient stockés séparément et mélangés au moment de l'emploi, comme par exemple les kits de catalyseur et d'élastomères et les kits de teintures pour cheveux.

Le procédé de l'invention est notamment applicable dans le domaine de la production de produits chimiques, des colorants, des produits cosmétiques, des parfums, de l'automobile, et des peintures.

**Procédé de libération**

Selon un autre objet, la présente invention concerne un procédé de libération d'un composé A encapsulé dans des capsules selon l'invention.

La présente invention concerne un procédé de libération d'un composé A, comprenant une étape de chauffage à une température T d'une composition selon l'invention, ladite température T étant supérieure ou égale au point de fusion de la cire ou du fluorocarbone ou de leurs mélanges tels que définis dans la revendication 1.

De préférence, cette étape de chauffage à une température T supérieure à T4 est apte à dilater le matériau thermo-expansible de la composition C2.

Typiquement, la température T de libération est supérieure d'au moins 20°C à la température T4.

De préférence, la température T de libération est supérieure ou égale à T2.

La présente invention présente donc l'avantage de ne nécessiter qu'une élévation de température pour permettre la libération de composé A selon le procédé de libération de l'invention. En effet, une simple élévation de température provoque la dilatation du matériau thermo-expansible présent dans la ou les enveloppe(s) de composition C2 des capsules, ce qui impose un stress mécanique à la ou les enveloppe(s) rigides polymérisées. Ce stress mécanique se traduit par une perméabilisation (augmentation de la perméabilité) et/ou une fragmentation (rupture mécanique) de cette (ou ces) enveloppe(s) rigides (qui elle(s) ne peu(ven)t pas se dilater), permettant la libération du composé A contenu dans le cœur des capsules.

Dans les cas où la composition C2 est solide à la température T4 (typiquement à température ambiante), T est de préférence supérieure ou égale au point de fusion du matériau thermo-expansible, de sorte que celui-ci subit un changement d'état solide → liquide, provoquant une dilatation apte à fragmenter l'enveloppe rigide polymérisée. C'est typiquement le cas lorsque le matériau thermo-expansible est une cire solide à la température T4. Néanmoins, il est possible de mettre en œuvre le procédé de libération à une température T inférieure au point de fusion du matériau thermo-expansible.

Dans les cas où la composition C2 est liquide à la température T4 (typiquement à température ambiante), T est de préférence supérieure ou égale au point d'ébullition du matériau thermo-expansible, de sorte que celui-ci présente un changement d'état liquide → gaz provoquant une dilatation apte à fragmenter l'enveloppe rigidepolymérisée. C'est typiquement le cas lorsque le matériau thermo-expansible est un fluorocarbone liquide à la température T4. Néanmoins, il est possible de mettre en œuvre le procédé de libération à une température T inférieure au point d'ébullition du matériau thermo-expansible.

La présente invention permet ainsi d'initier thermiquement la réaction entre un composé A encapsulé et un composé B contenu dans la phase continue d'une composition telle que décrite ci-dessus, avec l'avantage d'assurer le contrôle de la température requise pour initier la réaction.

Le déclenchement de la libération peut être une augmentation globale de la température de la composition, ou une augmentation de température localisée au niveau de la ou des enveloppe(s) de composition C2 comprenant le matériau thermo-expansible.

Typiquement, la température T est supérieure ou égale à 60°C, de préférence supérieure ou égale à 70°C, avantageusement supérieure ou égale à 80°C, par exemple supérieure ou égale à 90°C.

Typiquement, la température T est comprise de 50°C à 200°C, de préférence de 60°C à 150°C, préférentiellement de 70°C à 120°C.

L'étape de chauffage peut durer de 5 minutes à plusieurs heures, par exemple 1 heure ou 2 heures.

Figures

La Figure 1 représente de manière schématique un mode de réalisation de la première variante du procédé de l'invention.

Lors de la première étape (étape a), on additionne sous agitation une composition C1 dans une composition C2, pour obtenir des gouttes 1 dispersées dans la composition C2. Lors de la deuxième étape (étape b), on additionne sous agitation l'émulsion obtenue précédemment dans une composition C3, pour obtenir des gouttes 10 dispersées dans la composition C3. Lors de la troisième étape (étape c), on additionne sous agitation l'émulsion obtenue précédemment dans une composition C4, pour obtenir des gouttes 20 dispersées dans la composition C4. Lors de la quatrième étape (étape d), on polymérise la composition C3, ce par quoi on obtient des capsules solides 30 selon l'invention.

La Figure 2 représente de manière schématique un mode de réalisation de la deuxième variante du procédé de l'invention.

Lors de la première étape (étape a), on additionne sous agitation une composition C1 (dispersion de gouttes comprenant le composé A dans une composition C'3) dans une composition C2, pour obtenir des gouttes 5 dispersées dans la composition C2. Lors de la deuxième étape (étape b), on additionne sous agitation l'émulsion obtenue précédemment dans une composition C3, pour obtenir des gouttes 15 dispersées dans la composition C3. Lors de la troisième étape (étape c), on additionne sous agitation l'émulsion obtenue précédemment dans une composition C4, pour obtenir des gouttes 25 dispersées dans la composition C4. Lors de la quatrième étape (étape d), on polymérise la composition C3, ce par quoi on obtient des capsules solides 35 selon l'invention.

Les Figures 3, 4 et 5 représentent de manière schématique des capsules solides 40-41-42, 50-51-52, et 60-61-62 obtenues selon la première, deuxième et troisième variante du procédé respectivement. Dans ces figures, les zones pointillées représentent la composition C1 contenant le composé A, les zones hachurées représentent les enveloppes de composition C2 comprenant le matériau thermo-expansible et les zones noires représentent les enveloppes polymérisées rigides.

La Figure 6 représente de manière schématique la fragmentation d'une capsule solide 40 selon l'invention en une capsule fragmentée 70, causée par le chauffage de ladite capsule 40 pour déclencher la libération du composé A contenu en son cœur. L'augmentation de la température provoque la dilation de l'enveloppe interne de composition C2, ce qui cause la fragmentation de l'enveloppe externe rigide polymérisée, permettant au composé A de s'échapper.

EXEMPLES

**Exemple** 1 - **Préparation de capsules selon l'invention**

1. Capsules selon la première variante du procédé

Cet exemple a mis en œuvre la première variante du procédé selon l'invention et a visé à formuler en une seule et même formulation le kit à 2 composants « SYLGARD® 184 Silicone Elastomer » commercialisé par la société DOW CORNING.

Ce kit est composé de deux composants et comprend, d'une part, une composition de siloxane et, d'autre part, une composition comprenant un catalyseur qui est normalement à mélanger à la composition de siloxane pour la réticuler. Ainsi, si on mélange ces deux composants, on forme une matrice polymère solide en moins de 24 heures à température ambiante.

Dans cet exemple, la composition C1 correspondait au premier composant du kit ci-dessus (composition de siloxane) et la composition C4 correspondait au second composant du kit ci-dessus (composition de catalyseur) :

Composition C1 (composant n°1 du kit SYLGARD®184 Silicone Elastomer) :

- 55,0% - 75,0% de dimethyl, methylhydrogen siloxane,
- 15,0% - 35,0% de dimethyl siloxane, dimethylvinyl-terminated,
- 10,0% - 30,0% de dimethylvinylated and trimethylated silica,
- 1,0% - 5,0% de tetramethyl tetravinyl cyclotetrasiloxane, et
- moins de 0,10% éthylbenzène.

Composition C4 (composant n°2 du kit SYLGARD®184 Silicone Elastomer) :

- complexe de platine (<200 ppm),
- 55,0 - 75,0% dimethyl siloxane, dimethylvinyl-terminated,
- 30,0 - 50,0% dimethylvinylated and trimethylated silica,
- <1,0% tetra(trimethylsiloxy) silane,
- 0,5% xylène, et
- 0,2% éthylbenzène.

Les compositions C2 et C3 ont les compositions suivantes :

Composition C2 :

- 50% Synton® PAO 100, et
- 50% Suppocire DM Pastilles.

Composition C3 :

- 10% 1,6-hexanediol diacrylate,
- 89% aliphatic polyurethane diacrylate, et
- 1% Darocure 1173.

Pour cet exemple, un agitateur T 25 ULTRA-TURRAX de la société IKA a été utilisé pour former les émulsions.

Etape a): 1 g de composition C1 a été ajoutée au goutte-à-goutte à 4 g de composition C2, sous agitation, à la température T2 = 40°C, ce par quoi une émulsion de gouttelettes de composition C1 dans la composition C2 a été obtenue.

Etape b) : Cette émulsion a ensuite été ajoutée au goutte-à-goutte à 2 g de composition C3, sous agitation, à la température T3 = 40°C, ce par quoi une émulsion C1-dans-C2-dans-C3 a été obtenue.

Etape c) : Cette émulsion a ensuite été ajoutée au goutte-à-goutte à 10 g de composition C4, sous agitation, à la température T4 = 25°C, ce par quoi une émulsion C1-dans-C2-dans-C3-dans-C4 a été obtenue.

Etape d) : Cette émulsion a ensuite été soumise au rayonnement d'une lampe UV (Light Box - Dymax Light Curing System, Model 2000 Flood) de 400 watts (315 - 395 nm), avec une intensité lumineuse de 0,1 W/cm$^2$, pendant 3 minutes, ce qui a provoqué la polymérisation de l'enveloppe externe de composition C3 des gouttes de l'émulsion.

Les capsules solides ont été observées à l'aide d'un microscope Olympus IX71, équipé d'un objectif UPlanSApo 100x/1.4, et à l'aide d'un microscope électronique à transmission JEOL JEM 2010F. La taille moyenne des capsules solides a été mesurée à l'aide du logiciel Image J et est de 2,5 μm ± 1.5 μm.

2. Capsules selon la deuxième variante du procédé

Cet exemple a mis en œuvre la deuxième variante du procédé selon l'invention et a visé à formuler en une seule et même formulation le kit à 2 composants « SYLGARD® 184 Silicone Elastomer » commercialisé par la société DOW CORNING.

Les compositions C2, C3 et C4 utilisées étaient les mêmes qu'à l'exemple 1.1 ci-dessus.

Toutefois, la composition C1 a été au préalable dispersée dans la composition C3 : 1 g de composition C1 a été ajoutée au goutte-à-goutte à 1 g de composition C3, sous agitation, ce par quoi une émulsion de gouttelettes de composition C1 dans la composition C3 a été obtenue.

Pour cet exemple, un agitateur T 25 ULTRA-TURRAX de la société IKA a été utilisé pour former les émulsions.

Etape a) : L'émulsion ainsi obtenue a été ajoutée au goutte-à-goutte à 4 g de composition C2, sous agitation, à la température T2 = 40°C, ce par quoi une émulsion C1-dans-C3-dans-C2 a été obtenue.

Etape b) : Cette émulsion a ensuite été ajoutée au goutte-à-goutte à 1 g de composition C3, sous agitation, à la température T3 = 40°C, ce par quoi une émulsion C1-dans-C3-dans-C2-dans-C3 a été obtenue.

Etape c) : Cette émulsion a ensuite été ajoutée au goutte-à-goutte à 10 g de composition C4, sous agitation, à la température T4 = 25°C, ce par quoi une émulsion C1-dans-C3-dans-C2-dans-C3-dans-C4 a été obtenue.

Etape d) : Cette émulsion a ensuite été soumise au rayonnement d'une lampe UV (Light Box - Dymax Light Curing System, Model 2000 Flood) de 400 watts (315 - 395 nm), avec une intensité lumineuse de 0,1 W/cm$^2$, pendant 3 minutes, ce qui a provoqué la polymérisation des enveloppes de composition C3 des gouttes de l'émulsion.

3. Capsules selon la troisième variante du procédé

Cet exemple a mis en œuvre la troisième variante du procédé selon l'invention et a visé à formuler en une seule et même formulation le kit à 2 composants « SYLGARD® 184 Silicone Elastomer » commercialisé par la société DOW CORNING.

Les compositions C1, C2, C3 et C4 utilisées étaient les mêmes qu'à l'exemple 1.1 ci-dessus.

Pour cet exemple, un agitateur T 25 ULTRA-TURRAX de la société IKA a été utilisé pour former les émulsions.

Etape a): 1 g de composition C1 a été ajoutée au goutte-à-goutte à 1 g de composition C2, sous agitation, à la température T2 = 40°C, ce par quoi une émulsion C1--dans-C2 de gouttelettes de composition C1 dans la composition C2 a été obtenue.

Etape b) : Cette émulsion a ensuite été ajoutée au goutte-à-goutte à 1 g de composition C3, sous agitation, à la température T3 = 40°C, ce par quoi une émulsion C1--dans-C2-dans-C3 a été obtenue.

Etape a) répétée : Cette émulsion a ensuite au goutte-à-goutte à 1 g de composition C2, sous agitation, à la température T2 = 40°C, ce par quoi une émulsion C1-dans-C2-dans-C3-dans-C2 a été obtenue.

Etape b) répétée : Cette émulsion a ensuite été ajoutée au goutte-à-goutte à 1 g de composition C3, sous agitation, à la température T3 = 40°C, ce par quoi une émulsion C1-dans-C2-dans-C3-dans-C2-dans-C3 a été obtenue.

Etape c) : Cette émulsion a ensuite été ajoutée au goutte-à-goutte à 10 g de composition C4, sous agitation, à la température T4 = 25°C, ce par quoi une émulsion C1-dans-C2-dans-C3-dans-C2-dans-C3-dans-C4 a été obtenue.

Etape d) : Cette émulsion a ensuite été soumise au rayonnement d'une lampe UV (Light Box - Dymax Light Curing System, Model 2000 Flood) de 400 watts (315 - 395 nm), avec une intensité lumineuse de 0,1 W/cm$^2$, pendant 3 minutes, ce qui a provoqué la polymérisation des enveloppes de composition C3 des gouttes de l'émulsion.

## Exemple 2 - Stabilité des capsules selon l'invention

La viscosité des compositions obtenues à l'issue de l'étape d) des exemples 1.1, 1.2 et 1.3 ont été mesurées au cours du temps pour vérifier que la composition C1 encapsulée dans le cœur des capsules y restait bien confinée et en particulier qu'elle ne rencontrait pas la composition C4.

La viscosité a été mesurée à 25°C avec un rhéomètre HAAKE™ Rheostress 600 sur 30 jours et aucune variation n'a été observée, montrant qu'aucune fuite de composition C1 n'a eu lieu.

Le 30$^{ème}$ jour, les compositions ont été portées à 90°C pendant 2h en vue de libérer la composition C1. A l'issue de ce chauffage, la viscosité n'a pu être mesurée car les compositions avaient polymérisé.

## Exemple 3 - Fragmentation des capsules selon l'invention

La composition obtenue à l'exemple 1.1 a été observée en microscopie (microscope Olympus IX71 équipé d'un objectif UPlanSApo 100x/1.4).

Avant chauffage de la composition (2 h à 90°C), les capsules étaient intactes. Après chauffage (2 h à 90°C), les capsules étaient fragmentées.

## Exemple 4 comparatif

Des capsules comparatives obtenues selon un procédé non conforme à l'invention ont également été préparées.

Selon un premier essai comparatif, des capsules ont été préparées en suivant le procédé de l'exemple 1 à l'exception des étapes c) et d). Ces capsules ne possédaient donc pas d'enveloppe externe rigide polymérisée. Laissée à température ambiante, la composition obtenue a polymérisé dès le 2$^{ème}$ jour.

Selon un deuxième essai comparatif, des capsules ont été préparées en suivant le procédé de l'exemple 1 à l'exception de l'étape b). Ces capsules ne possédaient donc pas d'enveloppe thermo-expansible. Laissée à température ambiante, la composition obtenue a polymérisé dès le 5$^{ème}$ jour.

## Revendications

1. Procédé de préparation de capsules solides (30 ; 35), comprenant les étapes suivantes :

   a) addition sous agitation d'une composition C1 comprenant au moins un composé A, dans une composition liquide C2 comprenant un matériau thermo-expansible, ledit matériau thermo-expansible étant choisi dans le groupe constitué des cires, des fluorocarbones, et de leurs mélanges,

        C1 et C2 n'étant pas miscibles l'une dans l'autre,
        C2 étant à une température T2,
        ce par quoi on obtient une émulsion comprenant des gouttes (1 ; 5) de composition C1 dispersées dans la composition C2,

   b) addition sous agitation de l'émulsion obtenue à l'étape a) dans une composition liquide C3 apte à être polymérisée,

        C3 et C2 n'étant pas miscibles l'une dans l'autre,
        C3 étant à une température T3, de préférence égale à T2,
        ce par quoi on obtient une émulsion comprenant des gouttes (10; 15) dispersées dans la composition C3,

c) addition sous agitation de l'émulsion obtenue à l'étape b) dans une composition liquide C4,

C4 et C3 n'étant pas miscibles l'une dans l'autre,
C4 étant à une température T4 inférieure ou égale à T2 et inférieure ou égale à T3, ce par quoi on obtient une émulsion comprenant des gouttes (20 ; 25) dispersées dans la composition C4, et

d) polymérisation par réticulation des gouttes (20 ; 25) obtenues à l'étape c), ce par quoi on obtient des capsules solides (30 ; 35) dispersées dans la composition C4.

2. Procédé selon la revendication 1, dans lequel la composition C1 est une solution comprenant le composé A sous forme solubilisée.

3. Procédé selon la revendication 1, dans lequel la composition C1 est une émulsion formée de gouttes d'une solution comprenant le composé A sous forme solubilisée, lesdites gouttes étant dispersées dans une composition C'3 apte à être polymérisée.

4. Procédé selon l'une des revendications 1 à 3, dans lequel on réitère, après l'étape b) et avant l'étape c), au moins une fois les étapes a) et b).

5. Procédé selon l'une des revendications 1 à 4, dans lequel le matériau thermo-expansible est une cire hydrocarbonée, d'origine végétale, minérale, animale et/ou synthétique.

6. Procédé selon l'une des revendications 1 à 5, dans lequel le matériau thermo-expansible comprend une cire choisie dans le groupe constitué des mono-, di- et triesters de glycérol et d'acides gras ayant une chaîne hydrocarbonée linéaire ou ramifiée comprenant de 8 à 24 atomes de carbone, et leurs mélanges, de préférence dans le groupe constitué par le trimyristate de glycérol, le tripalmitate de glycérol, le monostéarate de glycérol, le cétylpalmitate de glycérol et leurs mélanges.

7. Procédé selon l'une des revendications 1 à 4, dans lequel le matériau thermo-expansible est un fluorocarbone choisi dans le groupe constitué des composés aromatiques fluorés en $C_6$-$C_{20}$, des hydrocarbures fluorés linéaires ou cycliques en $C_6$-$C_{20}$, des hydrocarbures fluorés linéaires insaturés en $C_6$-$C_{20}$, des esters fluorés en $C_3$-$C_{20}$, des éthers fluorés en $C_3$-$C_{20}$, des cétones fluorées en $C_3$-$C_{20}$, et des carbonates fluorés en $C_3$-$C_{20}$.

8. Procédé selon l'une des revendications 1 à 7, dans lequel la composition C3 comprend au moins un monomère insaturé ou un pré-polymère insaturé, de préférence porteur de fonctions (méth)acrylate, un agent réticulant et un photoamorceur.

9. Procédé selon l'une des revendications 1 à 8, dans lequel la composition C4 comprend au moins un composé B, différent du composé A, apte à réagir avec le composé A.

10. Procédé selon l'une des revendications 1 à 9, dans lequel l'étape d) est effectuée par exposition des gouttes (20 ; 25) obtenues à l'issue de l'étape c) à un rayonnement lumineux apte à polymériser la composition C3 et la composition C'3 éventuellement présente.

11. Capsule solide (30), susceptible d'être obtenue selon le procédé selon la revendication 8, comprenant :

- un cœur comprenant une solution comprenant le composé A,
- une enveloppe interne comprenant un matériau thermo-expansible, disposée autour dudit cœur, ledit matériau thermo-expansible étant choisi dans le groupe constitué des cires, des fluorocarbones, et de leurs mélanges, et
- une enveloppe externe rigide polymérisée disposée autour de ladite enveloppe interne, ladite enveloppe externe rigide polymérisée n'étant pas obtenue par coacervation.

12. Capsule solide (35), susceptible d'être obtenue selon le procédé selon l'une des revendications 3 à 10, comprenant :

- un cœur comprenant une solution comprenant le composé A,
- une enveloppe interne rigide polymérisée disposée autour dudit cœur,
- une enveloppe intermédiaire comprenant un matériau thermo-expansible, disposée autour de ladite enveloppe interne rigide polymérisée, ledit matériau thermo-expansible étant choisi dans le groupe constitué des cires, des fluorocarbones, et de leurs mélanges, et
- une enveloppe externe rigide polymérisée disposée autour de ladite enveloppe intermédiaire, ladite enveloppe externe rigide polymérisée n'étant pas obtenue par coacervation.

13. Composition comprenant au moins une capsule solide (30) selon la revendication 11 ou au moins une capsule solide (35) selon la revendication 12, ladite capsule étant dispersée dans une phase liquide continue correspondant à la composition C4 définie à la revendication 1.

**14.** Composition selon la revendication 13, dans laquelle la phase liquide continue comprend au moins un composé B, différent du composé A, apte à réagir avec le composé A.

**15.** Procédé de libération d'un composé A, comprenant une étape de chauffage à une température T d'une composition selon la revendication 13 ou 14, ladite température T étant supérieure ou égale au point de fusion de la cire ou du fluorocarbone ou de leurs mélanges tels que définis dans la revendication 1.

**Patentansprüche**

**1.** Verfahren zur Herstellung von festen Kapseln (30; 35), umfassend die folgenden Schritte:

a) Hinzufügen unter Rühren einer Zusammensetzung C1, umfassend mindestens eine Verbindung A, in eine flüssige Zusammensetzung C2, umfassend ein wärmeexpandierbares Material, wobei das wärmeexpandierbare Material ausgewählt ist aus der Gruppe, bestehend aus Wachsen, Fluorkohlenstoffen und Gemischen davon,

wobei C1 und C2 nicht miteinander mischbar sind,
C2 bei einer Temperatur T2 ist,
wodurch eine Emulsion erlangt wird, umfassend Tropfen (1; 5) der Zusammensetzung C1, die in der Zusammensetzung C2 dispergiert sind,

b) Hinzufügen unter Rühren der in Schritt a) erlangten Emulsion in eine flüssige Zusammensetzung C3, die geeignet ist, um polymerisiert zu werden,

wobei C3 und C2 nicht miteinander mischbar sind,
C3 bei einer Temperatur T3, vorzugsweise gleich T2, ist,
wodurch eine Emulsion erlangt wird, die Tropfen (10; 15) umfasst, die in der Zusammensetzung C3 dispergiert sind,

c) Hinzufügen unter Rühren der in Schritt b) erlangten Emulsion in eine flüssige Zusammensetzung C4,

wobei C4 und C3 nicht miteinander mischbar sind,
wobei C4 bei einer Temperatur T4 ist, die niedriger als oder gleich wie T2 und niedriger als oder gleich wie T3 ist,
wodurch eine Emulsion erlangt wird, umfassend Tropfen (20; 25), die in der Zusammensetzung C4 dispergiert sind, und

d) Polymerisation durch Vernetzung der in Schritt c) erlangten Tropfen (20; 25), wodurch feste Kapseln (30; 35) erlangt werden, die in der Zusammensetzung C4 dispergiert sind.

**2.** Verfahren nach Anspruch 1, wobei die Zusammensetzung C1 eine Lösung ist, umfassend die Verbindung A in solubilisierter Form.

**3.** Verfahren nach Anspruch 1, wobei die Zusammensetzung C1 eine Emulsion ist, die aus Tropfen einer Lösung gebildet wird, umfassend die Verbindung A in solubilisierter Form, wobei die Tropfen in einer Zusammensetzung C'3 dispergiert sind, die geeignet ist, um polymerisiert zu werden.

**4.** Verfahren nach einem der Ansprüche 1 bis 3, wobei nach Schritt b) und vor Schritt c) mindestens einmal die Schritte a) und b) wiederholt werden.

**5.** Verfahren nach einem der Ansprüche 1 bis 4, wobei das wärmeexpandierbare Material ein Kohlenwasserstoffwachs pflanzlichen, mineralischen, tierischen und/oder synthetischen Ursprungs ist.

**6.** Verfahren nach einem der Ansprüche 1 bis 5, wobei das wärmeexpandierbare Material ein Wachs umfasst, das ausgewählt ist aus der Gruppe, bestehend aus Mono-, Di- und Triestern von Glycerin und Fettsäuren mit einer geraden oder verzweigten Kohlenwasserstoffkette, umfassend 8 bis 24 Kohlenstoffatome und Gemische davon, vorzugsweise aus der Gruppe, bestehend aus Glycerintrimyristat, Glycerintripalmitat, Glycerinmonostearat, Glycerinketylpalmitat und Gemischen davon.

**7.** Verfahren nach einem der Ansprüche 1 bis 4, wobei das wärmeexpandierbare Material ein Fluorkohlenstoff ist, ausgewählt aus der Gruppe, bestehend aus aromatischen fluorierten $C_6$-$C_{20}$-Verbindungen, linearen oder cyclischen fluorierten $C_6$-$C_{20}$-Kohlenwasserstoffen, ungesättigten linearen fluorierten $C_6$-$C_{20}$-Kohlenwasserstoffen, fluorierten $C_3$-$C_{20}$-Estern, fluorierten $C_3$-$C_{20}$-Ethern, fluorierten $C_3$-$C_{20}$-Ketonen und fluorierten $C_3$-$C_{20}$-Carbonaten.

**8.** Verfahren nach einem der Ansprüche 1 bis 7, wobei die Zusammensetzung C3 mindestens ein ungesättigtes Monomer oder ungesättigtes Prepolymer, vorzugsweise mit (Meth)acrylatfunktionen, ein Vernetzungsmittel und einen Fotoinitiator umfasst.

**9.** Verfahren nach einem der Ansprüche 1 bis 8, wobei die Zusammensetzung C4 mindestens eine Verbindung B umfasst, die sich von der Verbindung A unterscheidet und geeignet ist, um mit der Verbindung A zu reagieren.

10. Verfahren nach einem der Ansprüche 1 bis 9, wobei der Schritt d) durchgeführt wird, indem die nach Schritt c) erlangten Tropfen (20; 25) einer Lichtstrahlung ausgesetzt werden, die geeignet ist, um die Zusammensetzung C3 und die optional vorhandene Zusammensetzung C'3 zu polymerisieren.

11. Feste Kapsel (30), die gemäß dem Verfahren nach Anspruch 8 erlangt werden kann, umfassend:

- einen Kern, umfassend eine Lösung, die die Verbindung A umfasst,
- eine innere Hülle, umfassend ein wärmeexpandierbares Material, angeordnet um den Kern, wobei das wärmeexpandierbare Material ausgewählt ist aus der Gruppe, bestehend aus Wachsen, Fluorkohlenstoffen und Gemischen davon, und
- eine polymerisierte starre äußere Hülle, die um die innere Hülle angeordnet ist, wobei die polymerisierte starre äußere Hülle nicht durch Koazervation erlangt wird.

12. Feste Kapsel (35), die gemäß dem Verfahren nach einem der Ansprüche 3 bis 10 erlangt werden kann, umfassend:

- einen Kern, umfassend eine Lösung, die die Verbindung A umfasst,
- eine starre, polymerisierte innere Hülle, die um den Kern angeordnet ist,
- eine Zwischenhülle, umfassend ein wärmeexpandierbares Material, angeordnet um die polymerisierte starre innere Hülle, wobei das wärmeexpandierbare Material ausgewählt ist aus der Gruppe, bestehend aus Wachsen, Fluorkohlenstoffen und Gemischen davon, und
- -eine polymerisierte starre äußere Hülle, die um die Zwischenhülle angeordnet ist, wobei die polymerisierte starre äußere Hülle nicht durch Koazervation erlangt wird.

13. Zusammensetzung, umfassend mindestens eine feste Kapsel (30) nach Anspruch 11 oder mindestens eine feste Kapsel (35) nach Anspruch 12, wobei die Kapsel in einer kontinuierlichen flüssigen Phase dispergiert ist, die der in Anspruch 1 definierten Zusammensetzung C4 entspricht.

14. Zusammensetzung nach Anspruch 13, wobei die kontinuierliche flüssige Phase mindestens eine Verbindung B umfasst, die sich von Verbindung A unterscheidet und geeignet ist, um mit der Verbindung A zu reagieren.

15. Verfahren zur Freisetzung einer Verbindung A, umfassend einen Schritt eines Erhitzens einer Zusammensetzung nach Anspruch 13 oder 14 auf eine Temperatur T, wobei die Temperatur T gleich wie oder höher als der Schmelzpunkt von Wachs oder Fluorkohlenstoff oder Gemischen davon ist, wie es in Anspruch 1 definiert ist.

**Claims**

1. A method for preparing solid capsules (30; 35), comprising the following steps:

a) adding with stirring a composition C1 comprising at least one compound A, in a liquid composition C2 comprising a thermo-expansible material, said thermo-expansible material being selected from the group consisting of waxes, fluorocarbons, and mixtures thereof

C1 and C2 not being miscible with each other,
C2 being at temperature T2,
whereby an emulsion is obtained comprising drops (1; 5) of composition C1 dispersed in the composition C2,

b) addition with stirring of the emulsion obtained in step a) into a liquid composition C3 able to be polymerized,

C3 and C2 not being miscible with each other,
C3 being at temperature T3, preferably equal to T2,
whereby an emulsion is obtained comprising drops (10; 15) dispersed in the composition C3,

c) addition with stirring of the emulsion obtained in step b) in a liquid composition C4,

C4 and C3 not being miscible with each other,
C4 being at temperature T4 less than or equal to T2 and less than or equal to T3,
whereby an emulsion is obtained comprising drops (20; 25) dispersed in the composition C4, and

d) polymerization of the drops (20; 25) obtained in step c),
whereby solid capsules (30; 35) are obtained, dispersed in the composition C4.

2. The method according to claim 1, wherein the composition C1 is a solution comprising the compound A in a solubilized form.

3. The method according to claim 1, wherein the composition C1 is an emulsion formed with drops of a solution comprising the compound A in a solubilized form, said drops being dispersed in a composition C'3 able to be polymerized.

4. The method according to one of claims 1 to 3, wherein after step b) and before step c), steps a) and b) are repeated at least once.

5. The method according to one of claims 1 to 4, wherein the thermo-expansible material is a hydrocarbon wax, of plant, mineral, animal and/or synthetic origin.

6. The method according to one of claims 1 to 5, wherein the thermo-expansible material comprises a wax selected from the group consisting of mono-, di- and tri-esters of glycerol and of fatty acids having a linear or branched hydrocarbon chain comprising from 8 to 24 carbon atoms, and mixtures thereof, preferably from the group formed by glycerol trimyristate, glycerol tripalmitate, glycerol monostearate, glycerol cetylpalmitate and mixtures thereof.

7. The method according to one of claims 1 to 4, wherein the thermo-expansible material is a fluorocarbon selected from the group consisting of fluorinated aromatic $C_6$-$C_{20}$ compounds, linear or cyclic fluorinated $C_6$-$C_{20}$ hydrocarbons, unsaturated linear fluorinated $C_6$-$C_{20}$ hydrocarbons, fluorinated $C_3$-$C_{20}$ esters, fluorinated $C_3$-$C_{20}$ ethers, fluorinated $C_3$-$C_{20}$ ketones, and fluorinated $C_3$-$C_{20}$ carbonates.

8. The method according to one of claims 1 to 7, wherein the composition C3 comprises at least one unsaturated monomer or one unsaturated pre-polymer, preferably bearing (meth)acrylate functions, a crosslinking agent and a photoinitiator.

9. The method according to one of claims 1 to 8, wherein the composition C4 comprises at least one compound B, different from compound A, able to react with the compound A.

10. The method according to one of claims 1 to 9, wherein the step d) is carried out by exposure of the drops (20; 25) obtained at the end of step c) to light radiation able to polymerize the composition C3 and the composition C'3 possibly present.

11. A solid capsule (30), which may be obtained according to the method according to claim 8, comprising:

   - a core comprising a solution comprising the compound A,
   - an internal casing comprising a thermo-expansible material, positioned around said core, said thermo-expansible material being selected from the group consisting of waxes, fluorocarbons, and mixtures thereof, and
   - a polymerized rigid external casing positioned around said internal casing, said polymerized rigid external casing not being obtained by coacervation.

12. A solid capsule (35), which may be obtained according to the method according to one of claims 3 to 10, comprising:

   - a core comprising a solution comprising the compound A,
   - a polymerized rigid internal casing positioned around said core,
   - an intermediate casing comprising a thermo-expansible material, positioned around said polymerized rigid internal casing, said thermo-expansible material being selected from the group consisting of waxes, fluorocarbons, and mixtures thereof, and
   - a polymerized rigid external casing positioned around said intermediate casing, said polymerized rigid external casing not being obtained by coacervation.

13. A composition comprising at least one solid capsule (30) according to claim 11 or at least one solid capsule (35) according to claim 12, said capsule being dispersed in a continuous liquid phase corresponding to the composition C4 defined in claim 1.

14. The composition according to claim 13, wherein the continuous liquid phase comprises at least one compound B, different from compound A, able to react with compound A.

15. The release method for a compound A, comprising a heating step to a temperature T of a composition according to claim 13 or 14, said temperature T being greater than or equal to the melting point of the wax or fluorocarbon or mixtures thereof as defined in claim 1.

FIG.1

EP 3 250 316 B1

FIG.2

40     41     42

## FIG.3

50     51     52

## FIG.4

60     61     62

## FIG.5

40

70

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20120122688
- WO 2004041251 A
- CN 103962075
- WO 2013132083 A
- WO 2013132082 A
- US 2007148198 A